# EUROPEAN PATENT SPECIFICATION

(11) **EP 4 586 099 B1**
(45) Date of publication and mention of the grant of the patent: **24.12.2025**
(21) Application number: 25150142.5
(22) Date of filing: 03.01.2025
(51) Int. Cl.: G06F 13/16, G06F 3/06, G06F 12/0868, G06F 12/0891, G06F 12/12, G06F 12/02, G06F 12/123, G06F 12/126

(54) **MEMORY MANAGEMENT BASED ON BACKGROUND EVICTION**
SPEICHERVERWALTUNG AUF DER BASIS VON HINTERGRUNDAUSRÄUMUNG
GESTION DE MÉMOIRE BASÉE SUR UNE EXPULSION D'ARRIÈRE-PLAN

(30) Priority: 11.01.2024 US 202463620168 P; 25.03.2024 US 202418616153
(43) Date of publication of application: 16.07.2025
(73) Proprietor: Samsung Electronics Co., Ltd., Suwon-si, Gyeonggi-do 16677 (KR)
(72) Inventor: LI, Zongwang, San Jose, CA, 95134 (US); PEI, Shuyi, San Jose, CA, 95134 (US); KI, Yang Seok, San Jose, CA, 95134 (US); PITCHUMANI, Rekha, San Jose, CA, 95134 (US)
(74) Representative: Kuhnen & Wacker Patent- und Rechtsanwaltsbüro PartG mbB

(56) References cited:
- US-A1- 2010 306 448
- US-A1- 2019 042 444
- US-A1- 2022 004 495
- US-A1- 2022 350 484

## Description

### TECHNICAL FIELD

The disclosure relates generally to memory systems. In particular, the subject matter relates to low latency global persistent flush based on background eviction.

### BACKGROUND

The present background section is intended to provide context only, and the disclosure of any concept in this section does not constitute an admission that said concept is prior art.

In some systems, memory may be moved from a first storage location to a second storage location. Moving large amounts of data can take a relatively long time for some systems to perform. The time it takes to move the data can increase system latency and reduce system efficiency. Also, based on the time it takes to move the data, delays in system communication can occur, such as delays in communicating acknowledgements related to the successful movement of data. Additionally, data movement can consume a relatively large amount of energy, further reducing system efficiency. Such time delays often result in increased system costs and limits on storage capacity.

The above information disclosed in this Background section is only for enhancement of understanding of the background of the disclosure and therefore it may contain information that does not constitute prior art.

US 2010/306448 A1 discloses a device, system and method in which data in a write cache, that must at some point be written to non-volatile memory, is written to non-volatile memory after expiration of a threshold time period during which no new host commands are received. If either the last dirty entry is written back or a host command is received during the write-back process, the time threshold time period and auto-flush process is restarted.

### SUMMARY

In various embodiments, the systems and methods described herein include systems, methods, and apparatuses for low latency global persistent flush based on background eviction, as set out in the appended claims. In some aspects, the systems and methods described herein relate to a persistent memory controller for memory management, the persistent memory controller including: a metadata controller configured to generate metadata based on the metadata controller monitoring data in volatile memory; a memory manager configured to generate a request to remove the data in the volatile memory based on the metadata; and a data controller configured to process the request based on an arbitrator granting the request based on a request criterion and allowing the request to proceed to the data controller, wherein the request criterion is based on a weighted round robin selection process to determine which request to process next.

In some aspects, the systems and methods described herein relate to a persistent memory controller, wherein the data controller processing the request includes the data controller moving the data based on device idle time.

In some aspects, the systems and methods described herein relate to a persistent memory controller, wherein the request criterion is based on a priority of the request relative to a priority of a host request.

In some aspects, the systems and methods described herein relate to a persistent memory controller, wherein the request criterion is based on a pattern of the data in the volatile memory.

In some aspects, the systems and methods described herein relate to a persistent memory controller, wherein the request criterion is based on at least one of: an age of the data in the volatile memory, a hotness of the data in the volatile memory.

In some aspects, the systems and methods described herein relate to a persistent memory controller, wherein the request criterion is based on a number of requests at the memory manager relative to a number of requests at a host.

In some aspects, the systems and methods described herein relate to a persistent memory controller, wherein the request criterion is based on a frequency of requests at the memory manager relative to a frequency of requests at the host.

In some aspects, the systems and methods described herein relate to a persistent memory controller, wherein the request criterion is based on the memory manager determining a busy status of the host.

In some aspects, the systems and methods described herein relate to a persistent memory controller, wherein the metadata includes at least one of: a dirty status of the data in the volatile memory, an age of the data in the volatile memory, or register metadata that includes at least one of a dirty data count, a hot data count, a host request count, an eviction threshold, or a data hotness threshold.

In some aspects, the systems and methods described herein relate to a persistent memory controller, wherein the metadata describes the data in the volatile memory.

In some aspects, the systems and methods described herein relate to a method for memory management via at least one processor of one or more processors, the method including: generating metadata based on monitoring data in volatile memory; generating a request to remove the data in the volatile memory based on the metadata; and processing the request based on the request being allowed to proceed to a data controller in response to a granting of the request based on a request criterion, wherein the request criterion is based on a weighted round robin selection process to determine which request to process next.

In some aspects, the systems and methods described herein relate to a method, wherein processing the request includes moving the data based on device idle time.

In some aspects, the systems and methods described herein relate to a method, wherein the request criterion is based on at least one of: a priority of the request relative to a priority of a host request, or a pattern of the data in the volatile memory.

In some aspects, the systems and methods described herein relate to a method, wherein the request criterion is based on at least one of: an age of the data in the volatile memory, or a hotness of the data in the volatile memory.

In some aspects, the systems and methods described herein relate to a method, wherein the request criterion is based on a number of requests at a memory manager relative to a number of requests at a host.

In some aspects, the systems and methods described herein relate to a method, wherein the request criterion is based on at least one of: a frequency of requests at the memory manager relative to a frequency of requests at the host, or determining the host is in an idle state.

In some aspects, the systems and methods described herein relate to a method, wherein the metadata includes at least one of: a dirty status of the data in the volatile memory, an age of the data in the volatile memory, or register metadata that includes at least one of a dirty data count, a hot data count, a host request count, an eviction threshold, or a data hotness threshold.

In some aspects, the systems and methods described herein relate to a non-transitory computer-readable medium storing code, the code including instructions executable by at least one processor of a device to: generate metadata based on data monitored in volatile memory; generate a request to remove the data in the volatile memory based on the metadata; and process the request based on the request being allowed to proceed to a data controller in response to a granting of the request based on a request criterion.

In some aspects, the systems and methods described herein relate to a non-transitory computer-readable medium, wherein processing the request is based on further instructions executable by the at least one processor of the device to move the data during an idle time of the device.

In some aspects, the systems and methods described herein relate to a non-transitory computer-readable medium, wherein the request criterion is based on at least one of: a priority of the request relative to a priority of a host request, a pattern of the data in the volatile memory, an age of the data in the volatile memory, or a hotness of the data in the volatile memory.

A computer-readable medium is disclosed. The computer-readable medium stores instructions that, when executed by a computer, cause the computer to perform substantially the same or similar operations as described herein are further disclosed. Similarly, non-transitory computer-readable media, devices, and systems for performing substantially the same or similar operations as described herein are further disclosed.

The systems and methods of low latency global persistent flush (GPF) based on background eviction described herein include multiple advantages and benefits. For example, the systems and methods provide for volatile data being dumped to persistent storage during device idle time (e.g., idle time of a host system or a time of relatively low data traffic from the host system). Dumping data during device idle time reduces GPF dumping time and conserves energy dramatically. Also, based on the volatile data being dumped to persistent storage during device idle time, the responses to the host during GPF phase are made in a timely manner, thus reducing system overhead. Based on the reduced dumping energy being consumed, CXL PMEM storage capacity is increased (e.g., for NVMe server storage subsystem form factors, NVMe SSD form factors, such as E3.S, etc.).

### BRIEF DESCRIPTION OF THE DRAWINGS

The above-mentioned aspects and other aspects of the present systems and methods will be better understood when the present application is read in view of the following figures in which like numbers indicate similar or identical elements. Further, the drawings provided herein are for purpose of illustrating certain embodiments only; other embodiments, which may not be explicitly illustrated, are not excluded from the scope of this disclosure.

These and other features and advantages of the present disclosure will be appreciated and understood with reference to the specification, claims, and appended drawings wherein:
FIG. 1 illustrates an example system in accordance with one or more implementations as described herein.
FIG. 2 illustrates details of the system of FIG. 1, according to one or more implementations as described herein.
FIG. 3 illustrates an example system in accordance with one or more implementations as described herein.
FIG. 4 illustrates an example system in accordance with one or more implementations as described herein.
FIG. 5 depicts a flow diagram illustrating an example method associated with the disclosed systems, in accordance with example implementations described herein.
FIG. 6 depicts a flow diagram illustrating an example method associated with the disclosed systems, in accordance with example implementations described herein.
FIG. 7 depicts a flow diagram illustrating an example method associated with the disclosed systems, in accordance with example implementations described herein.
FIG. 8 depicts a flow diagram illustrating an example method associated with the disclosed systems, in accordance with example implementations described herein.
FIG. 9 depicts a flow diagram illustrating an example method associated with the disclosed systems, in accordance with example implementations described herein.
FIG. 10 depicts a flow diagram illustrating an example method associated with the disclosed systems, in accordance with example implementations described herein.
FIG. 11 depicts a flow diagram illustrating an example method associated with the disclosed systems, in accordance with example implementations described herein.

### DETAILED DESCRIPTION OF VARIOUS EMBODIMENTS

In some systems, all of the data in volatile memory may be dumped to persistent memory (e.g., non-volatile flash memory) based on a given persistent flush trigger. However, the time it takes to transfer all of the data in volatile memory to persistent memory takes a relatively long time (e.g., 3-4 seconds for 16GB data). A given device may require a relatively large amount of energy to guarantee the data is successfully dumped to persistent memory. This process results in increased system latency, increased system cost, lower system efficiency, and limited persistent memory capacity.

The details of one or more embodiments of the subject matter described herein are set forth in the accompanying drawings and the description below. Other features, aspects, and advantages of the subject matter will become apparent from the description, the drawings, and the claims.

Various embodiments of the present disclosure now will be described more fully hereinafter with reference to the accompanying drawings, in which some, but not all embodiments are shown. Indeed, the disclosure may be embodied in many different forms and should not be construed as limited to the embodiments set forth herein; rather, these embodiments are provided so that this disclosure will satisfy applicable legal requirements. The term "or" is used herein in both the alternative and conjunctive sense, unless otherwise indicated. The terms "illustrative" and "example" are used to be examples with no indication of quality level. Like numbers refer to like elements throughout. Arrows in each of the figures depict bi-directional data flow and/or bi-directional data flow capabilities. The terms "path," "pathway" and "route" are used interchangeably herein.

Embodiments of the present disclosure may be implemented in various ways, including as computer program products that comprise articles of manufacture. A computer program product may include a non-transitory computer-readable storage medium storing applications, programs, program components, scripts, source code, program code, object code, byte code, compiled code, interpreted code, machine code, executable instructions, and/or the like (also referred to herein as executable instructions, instructions for execution, computer program products, program code, and/or similar terms used herein interchangeably). Such non-transitory computer-readable storage media include all computer-readable media (including volatile and non-volatile media).

In one embodiment, a non-volatile computer-readable storage medium may include a floppy disk, flexible disk, hard disk, solid-state storage (SSS) (for example a solid-state drive (SSD)), solid state card (SSC), solid state module (SSM), enterprise flash drive, magnetic tape, or any other non-transitory magnetic medium, and/or the like. A non-volatile computer-readable storage medium may include a punch card, paper tape, optical mark sheet (or any other physical medium with patterns of holes or other optically recognizable indicia), compact disc read only memory (CD-ROM), compact disc-rewritable (CD-RW), digital versatile disc (DVD), Blu-ray disc (BD), any other non-transitory optical medium, and/or the like. Such a non-volatile computer-readable storage medium may include read-only memory (ROM), programmable read-only memory (PROM), erasable programmable read-only memory (EPROM), electrically erasable programmable read-only memory (EEPROM), flash memory (for example Serial, NAND, NOR, and/or the like), multimedia memory cards (MMC), secure digital (SD) memory cards, SmartMedia cards, CompactFlash (CF) cards, Memory Sticks, and/or the like. Further, a non-volatile computer-readable storage medium may include conductive-bridging random access memory (CBRAM), phase-change random access memory (PRAM), ferroelectric random-access memory (FeRAM), non-volatile random-access memory (NVRAM), magnetoresistive random-access memory (MRAM), resistive random-access memory (RRAM), Silicon-Oxide-Nitride-Oxide-Silicon memory (SONOS), floating junction gate random access memory (FJG RAM), Millipede memory, racetrack memory, and/or the like.

In one embodiment, a volatile computer-readable storage medium may include random access memory (RAM), dynamic random access memory (DRAM), static random access memory (SRAM), fast page mode dynamic random access memory (FPM DRAM), extended data-out dynamic random access memory (EDO DRAM), synchronous dynamic random access memory (SDRAM), double data rate synchronous dynamic random access memory (DDR SDRAM), double data rate type two synchronous dynamic random access memory (DDR2 SDRAM), double data rate type three synchronous dynamic random access memory (DDR3 SDRAM), Rambus dynamic random access memory (RDRAM), Twin Transistor RAM (TTRAM), Thyristor RAM (T-RAM), Zero-capacitor (Z-RAM), Rambus in-line memory component (RIMM), dual in-line memory component (DIMM), single in-line memory component (SIMM), video random access memory (VRAM), cache memory (including various levels), flash memory, register memory, and/or the like. It will be appreciated that where embodiments are described to use a computer-readable storage medium, other types of computer-readable storage media may be substituted for or used in addition to the computer-readable storage media described above.

As should be appreciated, various embodiments of the present disclosure may be implemented as methods, apparatus, systems, computing devices, computing entities, and/or the like. As such, embodiments of the present disclosure may take the form of an apparatus, system, computing device, computing entity, and/or the like executing instructions stored on a computer-readable storage medium to perform certain steps or operations. Thus, embodiments of the present disclosure may take the form of an entirely hardware embodiment, an entirely computer program product embodiment, and/or an embodiment that comprises a combination of computer program products and hardware performing certain steps or operations.

Embodiments of the present disclosure are described below with reference to block diagrams and flowchart illustrations. Thus, it should be understood that each block of the block diagrams and flowchart illustrations may be implemented in the form of a computer program product, an entirely hardware embodiment, a combination of hardware and computer program products, and/or apparatus, systems, computing devices, computing entities, and/or the like carrying out instructions, operations, steps, and similar words used interchangeably (for example the executable instructions, instructions for execution, program code, and/or the like) on a computer-readable storage medium for execution. For example, retrieval, loading, and execution of code may be performed sequentially, such that one instruction is retrieved, loaded, and executed at a time. In some example embodiments, retrieval, loading, and/or execution may be performed in parallel, such that multiple instructions are retrieved, loaded, and/or executed together. Thus, such embodiments can produce specifically configured machines performing the steps or operations specified in the block diagrams and flowchart illustrations. Accordingly, the block diagrams and flowchart illustrations support various combinations of embodiments for performing the specified instructions, operations, or steps.

The following description is presented to enable one of ordinary skill in the art to make and use the subject matter disclosed herein and to incorporate it in the context of particular applications. While the following is directed to specific examples, other and further examples may be devised without departing from the basic scope thereof.

In the description provided, numerous specific details are set forth in order to provide a more thorough understanding of the subject matter disclosed herein. It will, however, be apparent to one skilled in the art that the subject matter disclosed herein may be practiced without necessarily being limited to these specific details. In other instances, well-known structures and devices are shown in block diagram form, rather than in detail, in order to avoid obscuring the subject matter disclosed herein.

Various features are described herein with reference to the figures. It should be noted that the figures are only intended to facilitate the description of the features. The various features described are not intended as an exhaustive description of the subject matter disclosed herein or as a limitation on the scope of the subject matter disclosed herein. Additionally, an illustrated example need not have all the aspects or advantages shown. An aspect or an advantage described in conjunction with a particular example is not necessarily limited to that example and can be practiced in any other examples even if not so illustrated, or if not so explicitly described.

Furthermore, any element in a claim that does not explicitly state "means for" performing a specified function, or "step for" performing a specific function, is not to be interpreted as a "means" or "step" clause as specified in 35 U.S.C. Section 112, Paragraph 6. In particular, the use of "step of" or "act of" in the Claims herein is not intended to invoke the provisions of 35 U.S.C. 112, Paragraph 6.

It is noted that, if used, the labels left, right, front, back, top, bottom, forward, reverse, clockwise and counterclockwise have been used for convenience purposes only and are not intended to imply any particular fixed direction. Instead, the labels are used to reflect relative locations and/or directions between various portions of an object.

Any data processing may include data buffering, aligning incoming data from multiple communication lanes, forward error correction ("FEC"), and/or others. For example, data may be first received by an analog front end (AFE), which prepares the incoming for digital processing. The digital portion (e.g., DSPs) of the transceivers may provide skew management, equalization, reflection cancellation, and/or other functions. It is to be appreciated that the process described herein can provide many benefits, including saving both power and cost.

Moreover, the terms "system," "component," "module," "interface," "model," or the like are generally intended to refer to a computer-related entity, either hardware, a combination of hardware and software, software, or software in execution. For example, a component may be, but is not limited to being, a process running on a processor, a processor, an object, an executable, a thread of execution, a program, and/or a computer. By way of illustration, both an application running on a controller and the controller can be a component. One or more components may reside within a process and/or thread of execution and a component may be localized on one computer and/or distributed between two or more computers.

Unless explicitly stated otherwise, each numerical value and range may be interpreted as being approximate, as if the word "about" or "approximately" preceded the value of the value or range. Signals and corresponding nodes or ports might be referred to by the same name and are interchangeable for purposes here.

While embodiments may have been described with respect to circuit functions, the embodiments of the subject matter disclosed herein are not limited. Possible implementations may be embodied in a single integrated circuit, a multi-chip module, a single card, system-on-a-chip, or a multi-card circuit pack. As would be apparent to one skilled in the art, the various embodiments might also be implemented as part of a larger system. Such embodiments may be employed in conjunction with, for example, a digital signal processor, microcontroller, field-programmable gate array, application-specific integrated circuit, or general-purpose computer.

As would be apparent to one skilled in the art, various functions of circuit elements may also be implemented as processing blocks in a software program. Such software may be employed in, for example, a digital signal processor, microcontroller, or general-purpose computer. Such software may be embodied in the form of program code embodied in tangible media, such as magnetic recording media, optical recording media, solid-state memory, floppy diskettes, CD-ROMs, hard drives, or any other non-transitory machine-readable storage medium, that when the program code is loaded into and executed by a machine, such as a computer, the machine becomes an apparatus for practicing the subject matter disclosed herein. When implemented on a general-purpose processor, the program code segments combine with the processor to provide a unique device that operates analogously to specific logic circuits. Described embodiments may also be manifest in the form of a bit stream or other sequence of signal values electrically or optically transmitted through a medium, stored magnetic-field variations in a magnetic recording medium, etc., generated using a method and/or an apparatus as described herein.

In some examples, persistent memory (PMEM), also referred to as persistent storage, can include a solid-state memory device that can retain data when power is removed. PMEM may be referred to as non-volatile memory (NVM) or storage-class memory (SCM). PMEM) may be a solid-state high-performance byte-addressable memory device that resides on the memory bus. PMEM may be used by applications that are sensitive to downtime and that have high performance constraints (e.g., data centers, etc.).

In some aspects, Compute Express Link (CXL) may include high-speed, high-capacity connections between CPUs and devices. CXL may be used in various types of servers, high performance data center computers, and the like. CXL may be used in conjunction with PCIe. CXL may be configured to maintain a unified memory space. CXL can increase efficiency by allowing composability, scalability, and flexibility for heterogeneous and distributed compute architectures. CXL can provide more bandwidth than PCIe because, in some cases, it can support up to, for example, 32 lanes, while PCIe may be limited to, for example, a maximum of 16 lanes. CXL enables memory sharing between devices, allowing them to work together more efficiently. CXL can be configured to support various protocols such as CXL.io, CXL.mem, CXL.cache, etc.

CXL intellectual property (IP) can include logic configured to build a CXL device, host, or switch. In some cases, CXL IP can also be configured for dual-mode applications that support runtime-selectability between device and host mode. CXL IP can provide a secure, low-latency, and high-bandwidth interconnect for artificial intelligence (AI), machine learning, cloud computing applications, etc. In some cases, the CXL IP may include a controller, a physical layer (PHY), integrated development environment (IDE) security modules, verification IP. In some aspects, IP-level verification focuses on verifying the functionality of individual intellectual property (IP) blocks or modules. In some cases, IP blocks may include components such as processors, memory controllers, specialized hardware accelerators. System-on-Chip (SoC)-level verification can be configured to include verifying an entire SoC, which can include integrating multiple IP blocks, interconnections, and/or the overall system's behavior.

In some aspects, a memory eviction policy may be based on an algorithm that determines how to manage data in a memory. Memory eviction (e.g., memory management) can include a feature where file data blocks in memory are removed when usage exceeds a soft quota, creating space for new files. Web browsers, for example, can store images, code, fonts, icons and other items to help pages load rapidly. In some cases, this cache space can fill up relatively quickly. Eviction algorithms can be configured to decide which items to keep in the cache and which to evict. In some approaches, memory eviction policy can use knowledge of activity in the memory, along with any configuration provided at startup, to determine which if any data blocks should be evicted. In some aspects, least recently used (LRU) policy may be used where an item used the least recently is removed. Additionally, or alternatively. a first in first out (FIFO) algorithm may be used when the use of an element makes it less likely to be used in the future. Additionally, or alternatively. a time to leave (TTL) algorithm may be used where each data entry (e.g., data block, cache entry, etc.) is stamped with an expiration date. In some cases, once the time limit lapses, the data may be evicted (e.g., no matter how frequently and/or recently it was accessed). Additionally, or alternatively. a least frequently used (LFU) policy may be used where a data entry that is used the least number of times may be removed. In some cases, a memory eviction policy may be configured to evict data when a data metric and/or access metric corresponding to the data satisfies an eviction threshold or other eviction criteria for selectively removing the data from memory (e.g., volatile memory, cache, etc.).

In some aspects, eviction may include the process of removing old, unused, or large data from cache. In some cases, this can allow the cache to stay within a memory budget. In some cases, an eviction server may use an LRU algorithm to find and evict in-memory pages that have not been accessed recently. Not all data can be kept in memory at any given time. In some aspects, eviction can take care of making space for new data by freeing the memory of data infrequently accessed. In some cases, an eviction server may regularly find in-memory pages that have not been accessed in some time (e.g., based on LRU algorithm). In some cases, one or more background eviction threads can be configured to continuously process these pages, reconcile them to storage, and/or remove them from memory.

In some aspects, dynamic random-access memory (DRAM) can include a type of semiconductor memory that stores data (e.g., in a computer system's main memory). In some cases, DRAM may be a volatile type of RAM memory (e.g., DRAM loses data when the power is removed). In some examples, static RAM (SRAM) may include a type of memory that uses flip-flops to store each bit. SRAM can be volatile memory (e.g., SRAM loses data when power is removed). In some examples, SRAM may be used as cache (e.g., L1 cache, L2 cache for a processor), while DRAM may be used as main memory or system memory.

In some aspects, flash memory may include a non-volatile memory that can store and transfer data between a host and other digital device. In some cases, flash memory can be electronically erased and reprogrammed. Solid-state drives (SSDs) may include a type of non-volatile storage media that can be configured to store data on solid-state flash memory. SSDs may be used as secondary storage in a computer's storage hierarchy in some cases. Non-volatile memory express (NVMe) can include a transfer protocol that speeds up the transfer of data in solid-state storage devices (SSDs). NVMe can use the PCI Express (PCIe) bus to connect SSD storage to CPUs or servers. NAND flash can include a non-volatile storage technology that stores data without requiring power. NAND flash may be referred to as a memory chip. Flash memory cards and SSDs may be configured to use multiple NAND flash memory chips to store data. In data management, "hot" data may refer to data that is frequently accessed or in high demand. Hot data can be regularly in demand and in transit, and in some cases is not stored for long periods of time. Thus, data hotness can indicate the relative degree of how often data is accessed or requested.

In some examples, global persistent flush (GPF) can include a hardware mechanism that disperses all non-persistent data to a persistent destination on the same CXL domain (e.g., on the same device or another device in the same coherency domain). A CXL link (and the protocol agents on the devices coupled by the link) may be configured to support asynchronous DRAM refresh, a GPF protocol, and/or flow. In some cases, GPF may be implemented as a hardware-based mechanism associated with persistent memory that is used to flush cache and memory buffers to the persistent domain. GPF can be triggered by specific events where the software is not able to flush the data, such as, for example, in response to an indication of an imminent power loss or non-graceful reset, among other examples. Additionally, or alternatively, CXL agents can be configured to utilize messaging associated with a GPF flow to detect and identify errors, which, in some cases, may occur during attempted flushing to persistent memory. In some cases, enabling errors detected through the GPF flow may be used to improve system reliability given that the persistent data (e.g., relied upon by the system's applications) can be at stake and any possible loss of persistent data can be tracked to ensure correct and trusted operation, among other considerations. For a storage expansion unit, for example, GPF may be used to ensure that in-flight data (e.g., all in-flight data), whether written or already reported as written (e.g., while still in cache or memory), can finalize in the persistent destination or find its way to other persistent locations along the way.

In mathematical notation, ++ may be used to indicate the value of the operand is incremented by 1 (e.g., a++ is equivalent to a=a+1). Similarly, -- may be used to indicate the value of the operand is decremented by 1 (e.g., a-- is equivalent to a=a-1). Also, += and -= are operators that may be used to add a value to or subtract a value from a variable, respectively, the result being reassigned to the variable. For example, a+=b may indicate the value of the right operand is added to the original value of the left operand, resulting in a new value for the left operand (e.g., a+=b may be equivalent to a=a+b). Similarly, a-=b may indicate the value of the right operand is subtracted from the original value of the left operand, resulting in a new value for the left operand (e.g., a-=b may be equivalent to or a=a-b).

In some aspects, weighted round robin (WRR) may include a process scheduling algorithm that can be configured to use load balancing systems and methods. In some cases, WRR may be a more advanced version of the basic round robin algorithm, which distributes tasks evenly across all nodes (e.g., devices, device components, SoCs, systems, hosts, etc.). WRR can be a generalization of round-robin scheduling, and, in some cases, can serve a set of queues or tasks. In some cases, WRR may maintain a weighted list of nodes and forward new requests/processes in proportion to the weight of each node. In some aspects, the weight may be assigned to each node based on preset criteria and/or dynamic criteria that modifies the criteria according to circumstance and without human input. A criterion may include a node's process-handling capacity. In some cases, the higher the weight, the larger the proportion of requests/processes a node handles.

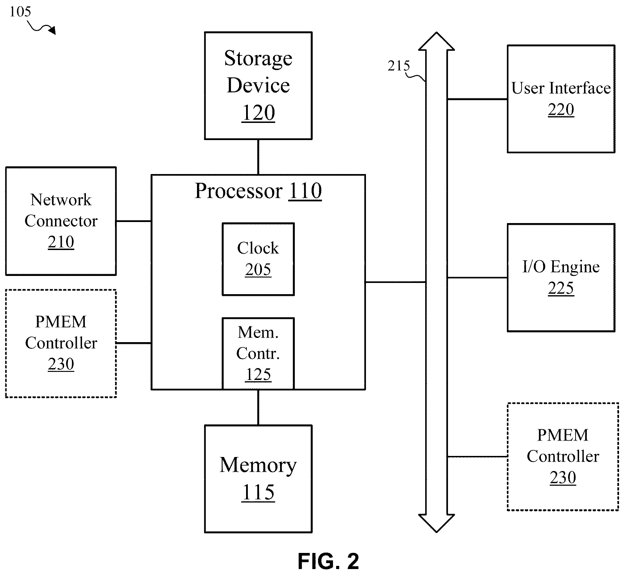

The systems and methods described herein provide a configurable eviction/arbitrator policy in accordance with low latency global persistent flush based on background eviction. The described systems and methods use a metadata handler with metadata storage to keep track of DRAM data dirty status and age status, etc. An eviction requester decides data dumping to persistent memory (e.g., NAND/SSD) based on metadata status. The metadata status includes the percentage of dirty data based on global registers for dirty status of each DRAM page, the data lifespan (e.g., data lifetime), data age, etc. With an arbitrator controls the incoming requests to the data controller based on the priority of host load/store (LD/ST) requests versus eviction requests, the incoming data pattern, the data age, data hotness, etc. In some cases, a data controller (e.g., data controller of FIG. 2) may process the requests from the arbitrator where the requests are based on a configurable eviction/arbitrator policy.

With some approaches, CXL PMEM may expose device DRAM to a host as a host-managed memory space with persistence. Thus, during some operations, transferring host load/store (LD/ST) data to DRAM of the CXL PMEM is done with relative low latency. During a power off and GPF stage, all DRAM data may be dumped to the NAND/SSD for persistence, increasing latency. During a power on stage, the data dumped to the NAND/SSD may be loaded from NAND/SSD to DRAM, further increasing latency.

With some approaches, CXL GPF flow may include GPF Phase 1 and GPF Phase 2 (e.g., GPF persistent flush 1 (PF1), GPF PF2). For such systems, all DRAM data may be dumped to persistent memory (e.g., NAND/SSD) based on a given persistent flush trigger. However, the time it takes to transfer all of the data in DRAM to persistent memory may take a relatively long time (e.g., 3-4 seconds for 16GB data with NVMe Gen4 SSD). In some cases, the host firmware may not be configured to receive GPF PF2 acknowledge (ACK) in a timely manner. A given device (e.g., a CXL PMEM device) may need a relatively large amount of energy unit to guarantee DRAM data is dumped successfully to NAND/SSD. This results in such systems having a relatively high cost and can result in a limited CXL PMEM capacity (e.g., due to form factor limitations).

In some respects, the systems and methods described herein address the relatively high cost and relatively high latency of other systems. For example, the systems and methods described herein include logic to provide low latency global persistent flush based on background eviction. The logic may include any combination of hardware (e.g., at least one memory, at least one processing unit), logical circuitry, firmware, and/or software to provide low latency global persistent flush based on background eviction. The systems and methods described herein can provide a metadata handler and storage for metadata that describes or indicates information regarding the data stored in DRAM. In some examples, the metadata handler may keep track of the data stored in DRAM and stores descriptions of this data as metadata in the metadata storage. The metadata may include the dirty status of DRAM data, the age of DRAM data, etc.

In some examples, the systems and methods may provide an eviction requester configured to determine data dumping to persistent memory (e.g., NAND/SSD) based on the metadata status provided by the metadata handler. The metadata status may include the percentage of dirty data, the data lifespan, etc. The systems and methods described herein can provide an arbitrator configured to control the incoming requests to the data controller based on the priority of host LD/ST requests versus eviction requests, based on weighted round robin, based on the incoming data pattern, data age, and/or based on data hotness, etc.

The systems and methods described herein can provide a data controller perform data process based on requests from arbitrator. The systems and methods described herein can provide a configurable eviction/arbitrator policy in accordance with low latency global persistent flush based on background eviction. Accordingly, the systems and methods described herein can include logic to provide low latency global persistent flush based on background eviction.

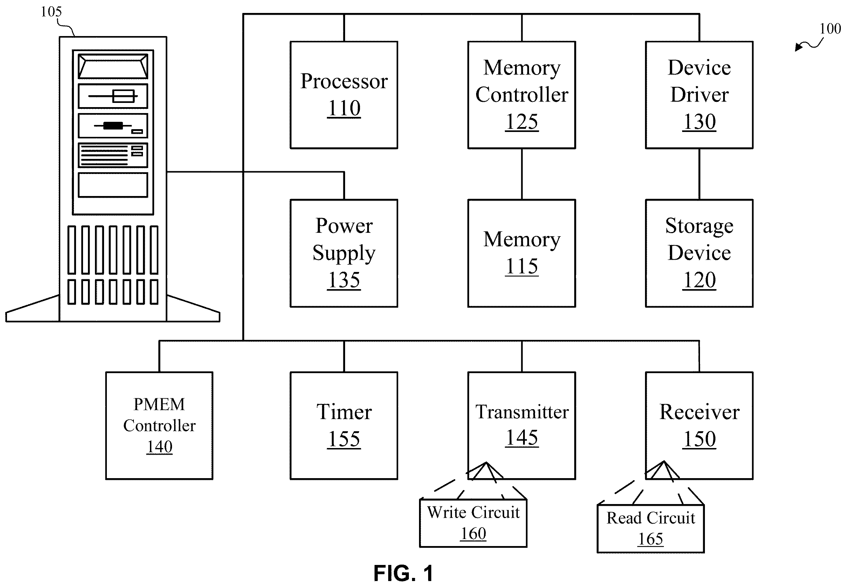

**FIG.** 1 illustrates an example system 100 in accordance with one or more implementations as described herein. In FIG. 1, machine 105, which may be termed a host, a system, or a server, is shown. While FIG. 1 depicts machine 105 as a tower computer, embodiments of the disclosure may extend to any form factor or type of machine. For example, machine 105 may be a rack server, a blade server, a desktop computer, a tower computer, a mini tower computer, a desktop server, a laptop computer, a notebook computer, a tablet computer, etc.

Machine 105 may include processor 110, memory 115, and storage device 120. Processor 110 may be any variety of processor. It is noted that processor 110, along with the other components discussed below, are shown outside the machine for ease of illustration: embodiments of the disclosure may include these components within the machine. While FIG. 1 shows a single processor 110, machine 105 may include any number of processors, each of which may be single core or multi-core processors, each of which may implement a Reduced Instruction Set Computer (RISC) architecture or a Complex Instruction Set Computer (CISC) architecture (among other possibilities), and may be mixed in any desired combination.

Processor 110 may be coupled to memory 115. Memory 115 may be any variety of memory, such as flash memory, Dynamic Random Access Memory (DRAM), Static Random Access Memory (SRAM), Persistent Random Access Memory, Ferroelectric Random Access Memory (FRAM), or Non-Volatile Random Access Memory (NVRAM), such as Magnetoresistive Random Access Memory (MRAM), Phase Change Memory (PCM), or Resistive Random-Access Memory (ReRAM). Memory 115 may include volatile and/or non-volatile memory. Memory 115 may use any desired form factor: for example, Single In-Line Memory Module (SIMM), Dual In-Line Memory Module (DIMM), Non-Volatile DIMM (NVDIMM), etc. Memory 115 may be any desired combination of different memory types, and may be managed by memory controller 125. Memory 115 may be used to store data that may be termed "short-term": that is, data not expected to be stored for extended periods of time. Examples of short-term data may include temporary files, data being used locally by applications (which may have been copied from other storage locations), and the like.

Processor 110 and memory 115 may support an operating system under which various applications may be running. These applications may issue requests (which may be termed commands) to read data from or write data to either memory 115 or storage device 120. When storage device 120 is used to support applications reading or writing data via some sort of file system, storage device 120 may be accessed using device driver 130. While FIG. 1 shows one storage device 120, there may be any number (one or more) of storage devices in machine 105. Storage device 120 may support any desired protocol or protocols, including, for example, the Non-Volatile Memory Express (NVMe) protocol, a Serial Attached Small Computer System Interface (SCSI) (SAS) protocol, or a Serial AT Attachment (SATA) protocol. Storage device 120 may include any desired interface, including, for example, a Peripheral Component Interconnect Express (PCIe) interface, or a Compute Express Link (CXL) interface. Storage device 120 may take any desired form factor, including, for example, a U.2 form factor, a U.3 form factor, a M.2 form factor, Enterprise and Data Center Standard Form Factor (EDSFF) (including all of its varieties, such as E1 short, E1 long, and the E3 varieties), or an Add-In Card (AIC).

While FIG. 1 uses the term "storage device," embodiments of the disclosure may include any storage device formats that may benefit from the use of computational storage units, examples of which may include hard disk drives, Solid State Drives (SSDs), or persistent memory devices, such as PCM, ReRAM, or MRAM. Any reference to "storage device" "SSD" below should be understood to include such other embodiments of the disclosure and other varieties of storage devices. In some cases, the term "storage unit" may encompass storage device 120 and memory 115.

Machine 105 may include power supply 135. Power supply 135 may provide power to machine 105 and its components. Machine 105 may include transmitter 145 and receiver 150. Transmitter 145 or receiver 150 may be respectively used to transmit or receive data (e.g., to and/or from volatile memory, to and/or from persistent memory, NAND/SSD). In some cases, transmitter 145 and/or receiver 150 may be used to communicate with memory 115 and/or storage device 120. Transmitter 145 may include write circuit 160, which may be used to write data (e.g., metadata) into storage, such as a register, in memory 115 and/or storage device 120. In a similar manner, receiver 150 may include read circuit 165, which may be used to read data (e.g., metadata) from storage, such as a register, in memory 115 and/or storage device 120.

In the illustrated example, machine 105 may include timer 155. Timer 155 may be used to maintain one or more counters (e.g., data age counter, dirty data counter, hot data counter, host request counter, etc.).

In one or more examples, machine 105 may be implemented with any type of apparatus. Machine 105 may be configured as (e.g., as a host of) one or more of a server such as a compute server, a storage server, storage node, a network server, a supercomputer, data center system, and/or the like, or any combination thereof. Additionally, or alternatively, machine 105 may be configured as (e.g., as a host of) one or more of a computer such as a workstation, a personal computer, a tablet, a smartphone, and/or the like, or any combination thereof. Machine 105 may be implemented with any type of apparatus that may be configured as a device including, for example, an accelerator device, a storage device, a network device, a memory expansion and/or buffer device, a central processing unit (CPU), a graphics processing unit (GPU), a neural processing unit (NPU), a tensor processing unit (TPU), and/or the like, or any combination thereof.

Any communication between devices including machine 105 (e.g., host, computational storage device, and/or any intermediary device) can occur over an interface that may be implemented with any type of wired and/or wireless communication medium, interface, protocol, and/or the like including PCIe, NVMe, Ethernet, NVMe-oF, Compute Express Link (CXL), and/or a coherent protocol such as CXL.mem, CXL.cache, CXL.IO and/or the like, Gen-Z, Open Coherent Accelerator Processor Interface (OpenCAPI), Cache Coherent Interconnect for Accelerators (CCIX), Advanced eXtensible Interface (AXI) and/or the like, or any combination thereof, Transmission Control Protocol/Internet Protocol (TCP/IP), FibreChannel, InfiniBand, Serial AT Attachment (SATA), Small Computer Systems Interface (SCSI), Serial Attached SCSI (SAS), iWARP, any generation of wireless network including 2G, 3G, 4G, 5G, and/or the like, any generation of Wi-Fi, Bluetooth, near-field communication (NFC), and/or the like, or any combination thereof. In some embodiments, the communication interfaces may include a communication fabric including one or more links, buses, switches, hubs, nodes, routers, translators, repeaters, and/or the like. In some embodiments, system 100 may include one or more additional apparatus having one or more additional communication interfaces.

Any of the functionality described herein, including any of the host functionality, device functionally, PMEM controller 140 functionality, and/or the like, may be implemented with hardware, software, firmware, or any combination thereof including, for example, hardware and/or software combinational logic, sequential logic, timers, counters, registers, state machines, volatile memories such as dynamic random access memory (DRAM) and/or static random access memory (SRAM), nonvolatile memory including flash memory, persistent memory such as cross-gridded nonvolatile memory, memory with bulk resistance change, phase change memory (PCM), and/or the like and/or any combination thereof, complex programmable logic devices (CPLDs), field programmable gate arrays (FPGAs), application specific integrated circuits (ASICs) CPUs including complex instruction set computer (CISC) processors such as x86 processors and/or reduced instruction set computer (RISC) processors such as RISC-V and/or ARM processors), graphics processing units (GPUs), neural processing units (NPUs), tensor processing units (TPUs) and/or the like, executing instructions stored in any type of memory. In some embodiments, one or more components of PMEM controller 140 may be implemented as a system-on-chip (SOC).

In some examples, PMEM controller 140 may include any one or combination of logic (e.g., logical circuit), hardware (e.g., processing unit, memory, storage), software, firmware, and the like. In some cases, PMEM controller 140 may perform one or more functions in conjunction with processor 110. In some cases, at least a portion of PMEM controller 140 may be implemented in or by processor 110 and/or memory 115. The one or more logic circuits of PMEM controller 140 may include any one or combination of multiplexers, registers, logic gates, arithmetic logic units (ALUs), cache, computer memory, microprocessors, processing units (CPUs, GPUs, NPUs, and/or TPUs), FPGAs, ASICs, etc., that enable PMEM controller 140 to provide low latency global persistent flush based on background eviction.

In one or more examples, PMEM controller 140 may dump volatile data to persistent storage during device idle time. Dumping data during device idle time reduces GPF dumping time and conserves energy dramatically. Also, based on the volatile data being dumped to persistent storage during device idle time, the responses to the host during GPF phase are made in a timely manner, thus reducing system overhead. Based on the reduced dumping energy being consumed, CXL PMEM storage capacity is increased (e.g., for NVMe server storage subsystem form factors, NVMe SSD form factors, such as E3.S, etc.)

**FIG. 2** illustrates details of machine 105 of FIG. 1, according to examples described herein. In FIG. 2, typically, machine 105 includes one or more processors 110, which may include memory controllers 125 and clocks 205, which may be used to coordinate the operations of the components of the machine. Processors 110 may be coupled to memories 115, which may include random access memory (RAM), read-only memory (ROM), or other state preserving media, as examples. Processors 110 may be coupled to storage devices 120, and to network connector 210, which may be, for example, an Ethernet connector or a wireless connector. Processors 110 may be connected to buses 215, to which may be attached user interfaces 220 and Input/Output (I/O) interface ports that may be managed using I/O engines 225, among other components. As shown, processors 110 may be coupled to PMEM controller 230, which may be an example of PMEM controller 140 of FIG. 1. Additionally, or alternatively, processors 110 may be connected to buses 215, to which may be attached PMEM controller 230. In some cases, buses 215 may include a CXL bus.

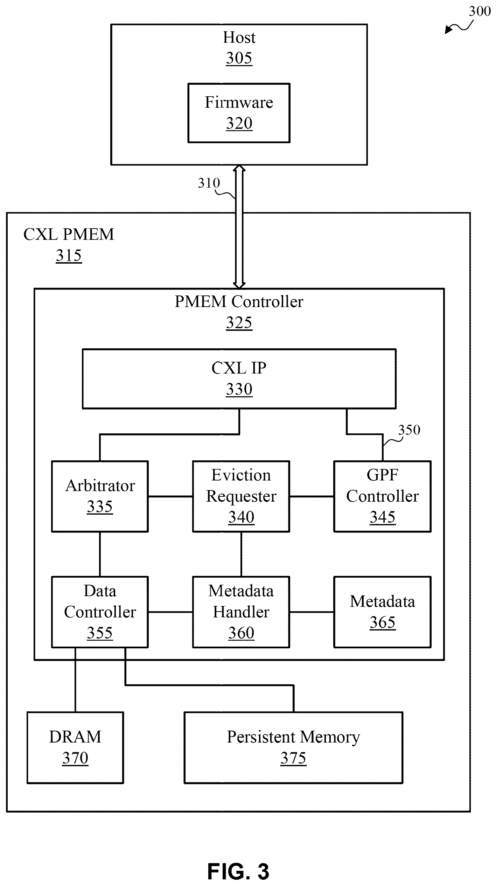

**FIG. 3** illustrates an example system 300 in accordance with one or more implementations as described herein. System 300 illustrates an example system of low latency GPF based on background eviction. In the illustrated example, system 300 includes a host 305 communicatively connected to CXL persistent memory (PMEM) 315 via a bus 310 (e.g., CXL bus). As shown, the host may include firmware 320 (e.g., platform firmware, host firmware). As shown, CXL PMEM 315 may include PMEM controller 325, DRAM 370, and persistent memory 375 (e.g., NAND flash, SSD, etc.). In some examples, PMEM controller 325 may be an example of PMEM controller 140 of FIG. 1 and/or PMEM controller 230 of FIG. 2. As shown, PMEM controller 325 may include CXL IP 330 (e.g., port logic), arbitrator 335, eviction requester 340 (e.g., memory manager), and GPF controller 345 that connects to CXL IP 330 via a CXL input output connection (e.g., CXL.io 350). In the illustrated example, PMEM controller 325 may include data controller 355, metadata handler 360 (e.g., metadata controller), and metadata 365 (e.g., a storage device storing metadata, registers storing metadata, global registers, etc.). In some cases, at least a portion of metadata 365 may be stored in SRAM. In some examples, a data path from the host to DRAM 370 and/or to persistent memory 375 may travel from host 305 to CXL IP 330, from CXL IP 330 to arbitrator 335, from arbitrator 335 to data controller 355, and from data controller 355 to DRAM 370 and/or to persistent memory 375.

In one or more examples, metadata handler 360 works in conjunction with metadata 365 (e.g., metadata related to data of DRAM 370 and/or data of persistent memory 375). For example, metadata handler 360 may work in conjunction with a storage device and/or memory device of PMEM controller 325 that stores metadata 365. In some implementations, metadata handler 360 keeps track of data associated with the CXL PMEM 315 (e.g., data of DRAM 370, data of persistent memory 375, metadata 365, etc.). In some cases, metadata handler 360 monitors the dirty status of data (e.g., data of DRAM 370). In some cases, metadata handler 360 monitors the age of data (e.g., DRAM data). In some examples, metadata handler 360 includes any combination of hardware (e.g., at least one memory, at least one processor), logical circuitry, firmware, and/or software configured to provide low latency GPF based on background eviction.

In one or more examples, eviction requester 340 may be configured to determine when data dumping to persistent memory 375 occurs based on a metadata status that is determined from metadata 365 (e.g., based on one or more indications of information included in metadata 365). Some examples of the metadata status may include the percentage of dirty data based on global registers configured for the dirty status of one or more memory pages of DRAM 370 (e.g., 16KB page). In some cases, the metadata status may include data lifetime (e.g., lifespan or lifetime of DRAM data, data age, etc.). In some examples, eviction requester 340 includes any combination of hardware (e.g., at least one memory, at least one processor), logical circuitry, firmware, and/or software configured to provide low latency GPF based on background eviction.

In one or more examples, arbitrator 335 controls incoming requests to data controller 355 based on at least one criterion. In some examples, the at least one criterion may include a priority of host load/store (LD/ST) requests versus a priority of eviction requests (e.g., associated with data in DRAM 370). For example, arbitrator 335 may allow an eviction request to proceed when arbitrator 335 determines a priority of the eviction request exceeds a priority of the host LD/ST request. In some cases, arbitrator 335 may block or delay an eviction request when arbitrator 335 determines a priority of the eviction request does not exceed a priority of the host LD/ST request.

In some examples, the at least one criterion may include an incoming data pattern (e.g., a frequency of access based on data type, a pattern of hot data, a pattern of cold data, a pattern of hot data and cold data, etc.), a data age, and/or data hotness (e.g., associated with data in DRAM 370). In some examples, arbitrator 335 includes any combination of hardware (e.g., at least one memory, at least one processor), logical circuitry, firmware, and/or software configured to provide low latency GPF based on background eviction. In one or more examples, arbitrator 335 may permit more eviction requests to proceed to data controller 355 based on arbitrator 335 detecting device idle time. In some cases, the background eviction systems and methods described herein enable PMEM controller 325 to back up at least a portion of the contents (e.g., the entire contents) of DRAM 370 during idle time so that when an event occurs (e.g., power off) at least the portion of DRAM 370 is already backed up, thus reducing system latency.

In some examples, arbitrator 335 may adjust an eviction threshold (e.g., an eviction threshold stored in a register of metadata 365) based on a device profile (e.g., memory capacity, storage capacity, data transfer rates (e.g., maximum data transfer rate), processing speed, processing capacity, etc.). In some examples, arbitrator 335 may adjust the eviction threshold based on an idle state of host 305 and/or an idle state of PMEM controller 325. For example, when arbitrator 335 determines that host 305 is relatively busy, arbitrator 335 may adjust the eviction threshold accordingly (e.g., adjust the eviction threshold to reduce an eviction rate while host 305 is busy). When arbitrator 335 determines that host 305 is idle, arbitrator 335 may adjust the eviction threshold accordingly (e.g., adjust the eviction threshold to increase an eviction rate while host 305 is idle).

In one or more examples, data controller 355 performs data processing according to requests (e.g., eviction requests) from arbitrator 335. For example, data controller 355 may dump volatile data of DRAM 370 to persistent memory 375 based on a request from arbitrator 335 (e.g., based on device idle time). In some examples, data controller 355 includes any combination of hardware (e.g., at least one memory, at least one processor), logical circuitry, firmware, and/or software configured to provide low latency GPF based on background eviction. Accordingly, the depicted components of system 300 provide a configurable eviction/arbitrator policy enabled by low latency GPF based on background eviction, as described herein.

In one or more examples, metadata handler 360 may be configured to generate metadata 365 based on metadata handler 360 monitoring data in volatile memory (e.g., DRAM 370). In some cases, eviction requester 340 may be configured to trigger an eviction request to evict data in DRAM 370 based on the metadata 365. In some examples, data controller 355 may be configured to process the eviction request based on arbitrator 335 analyzing the eviction request relative to at least one request criterion and forwarding the eviction request to data controller 355 based on a result of the analysis. In some examples, processing the eviction request includes data controller 355 being further configured to move the data during device idle time.

In one or more examples, the request criterion may be based on a priority of the eviction requests relative to a priority of a request of host 305. Additionally, or alternatively, the request criterion may be based on a pattern of the data in DRAM 370. Additionally, or alternatively, the request criterion may be based on at least one of: an age of the data in DRAM 370, a hotness of the data in DRAM 370, and/or a weighted round robin selection process to determine which request to process (e.g., which request to process next).

Additionally, or alternatively, the request criterion may be based on a number of requests (e.g., eviction requests) pending at eviction requester 340 relative to a number of requests (e.g., eviction requests) pending at host 305. Additionally, or alternatively, the request criterion may be based on a frequency of requests at eviction requester 340 relative to a frequency of requests at the host. Additionally, or alternatively, the request criterion may be based on eviction requester 340 determining host 305 is in an idle state.

In one or more examples, metadata 365 describes the data in DRAM 370. In some examples, metadata 365 may include at least one of: a dirty status of the data in the volatile memory and/or an age of the data in the volatile memory.

Additionally, or alternatively, metadata 365 may include at least one of a dirty data count (e.g., total dirty data count), a hot data count (e.g., total hot data count), a host request count, an eviction threshold, and/or a data hotness threshold (e.g., hot threshold). In some examples, metadata 365 may be stored in one or more registers. For example, a first register may include a dirty data counter that indicates a count of dirty data (e.g., total dirty data count), while a second register may include an eviction threshold.

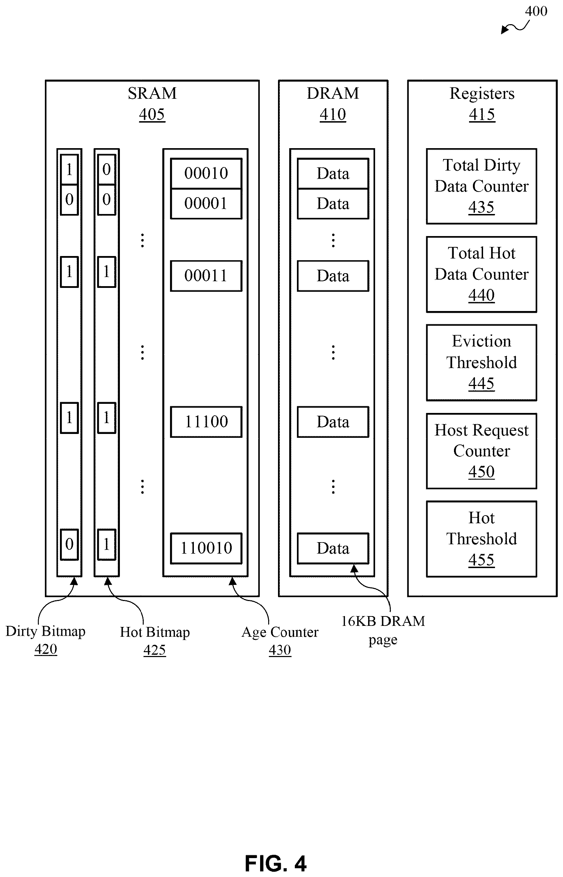

**FIG. 4** illustrates an example system 400 in accordance with one or more implementations as described herein. System 400 illustrates an example metadata structure of low latency GPF based on background eviction. In the illustrated example, system 400 includes SRAM 405, DRAM 410 (e.g., volatile memory), and registers 415 (e.g., storage for metadata such as metadata 365 of FIG. 2). In some examples, system 400 illustrates an example metadata structure and/or metadata storage of metadata handler 360 and/or metadata 365 of FIG. 2. DRAM 410 may be an example of DRAM 370 of FIG. 3. SRAM 405 and/or registers 415 may store at least a portion of metadata 365 of FIG. 3 (e.g., storage of metadata 365).

In the illustrated example, SRAM 405 includes dirty bitmap 420, where binary 1 may indicate dirty and binary 0 may indicate clean (e.g., or vice versa). In some implementations, SRAM 405 may include hot bitmap 425, binary 1 may indicate hot and binary 0 may indicate cold (e.g., or vice versa). In some examples, SRAM 405 may include age counter 430. In some cases, metadata handler 360 may adjust dirty bitmap 420, hot bitmap 425, and/or age counter 430 based on data processing (e.g., read operation, write operation, eviction operation, etc.).

In the illustrated example, DRAM 410 may include one or more pages (e.g., 16KB DRAM memory pages). In some cases, the values stored in registers 415 (e.g., counters, thresholds, etc.) may be based at least in part on values stored in SRAM 405 (e.g., dirty bitmap 420, hot bitmap 425, age counter 430). In some examples, the values stored in SRAM 405 may be based on the data stored in DRAM 410.

In some examples, the counters of registers 415 (e.g., age counter 430, total dirty data counter 435, total hot data counter 440, and/or host request counter 450) may be global counters (e.g., global registers). In some cases, the counters of registers 415 may be updated on the fly (e.g., via metadata handler 360) for each DRAM data request.

In some examples, the counters of registers 415 (e.g., metadata such as metadata 365) may be updated based on a related data page of DRAM 410. In some cases, data page size may be configurable (e.g., based on NAND page size and/or DRAM page size). In some cases, registers 415 may include at least one register to maintain a host request counter 450 to enable metadata handler 360 to monitor a device busy status (e.g., busy status of host 305 indicating a level of data traffic initiated by host 305).

In some examples, a structure or dimension of SRAM 405 (e.g., for metadata, for all metadata, metadata 365, etc.) may be configured for relatively fast access (e.g., by metadata handler 360). In some cases, dirty bitmap 420, hot bitmap 425, and/or age counter 430 may be configured as a row by some number of bits (e.g., each as a row of 7 bits in the depicted example, or collectively as a row of some number of bits based on system configuration).

In one or more examples, for a data page of DRAM 410 (e.g., for each DRAM data page), the metadata structure of system 400 may include a dirty bit flag of dirty bitmap 420, a hot flag bit of hot bitmap 425, and/or a value of age counter 430 (e.g., a 6-bit value of age counter 430). In some cases, the metadata structure of system 400 (e.g., 1 bit for dirty bitmap 420, 1 bit hot bitmap 425, 6-bits for age counter 430) may be configured by a host (e.g., host 305 of FIG. 3). In some cases, the metadata structure may be configured by the host based on CXL.io (e.g., based on the CXL.io protocol via CXL bus 310). In some implementations, a value of dirty bitmap 420, hot bitmap 425, and/or age counter 430 may correspond to at least one page of DRAM 410. For example, a value of dirty bitmap 420 (e.g., the top value "1" of dirty bitmap 420 as shown in FIG. 4) may correspond to a page of DRAM 410 (e.g., the top page of DRAM 410 as shown in FIG. 4). Additionally, or alternatively, a value of hot bitmap 425 (e.g., the top value "0" of hot bitmap 425 as shown in FIG. 4) may correspond to a page of DRAM 410 (e.g., the top page of DRAM 410 as shown in FIG. 4). Additionally, or alternatively, a value of age counter 430 (e.g., the top value "00010" of age counter 430 as shown in FIG. 4) may correspond to a page of DRAM 410 (e.g., the top page of DRAM 410 as shown in FIG. 4).

As shown, registers 415 may include at least one of total dirty data counter 435, total hot data counter 440, eviction threshold 445, host request counter 450, and/or hot threshold 455. For example, registers 415 may include a first register that includes a total dirty data count, a second register that includes a total hot data count, a third register that includes a selected eviction threshold, a fourth register that includes a host request count, and/or a fifth register that includes a selected hot threshold.

In one or more examples, eviction threshold 445 indicates a threshold based on a memory capacity of DRAM 410. In some cases, eviction threshold 445 may be a portion and/or a percentage of the memory capacity of DRAM 410 (e.g., any percentage from 0% to 100%). For example, with DRAM 410 having a 16GB memory capacity, eviction threshold 445 may be set at 12GB or 75% of the memory capacity, at 10GB or 62.5% of the memory capacity, at 8GB or 50% of the memory capacity, and so on. In some cases, the arbitrator 335 may be configured to select the eviction threshold 445. Additionally, or alternatively, a user may select the eviction threshold 445.

In some examples, hot threshold 455 indicates a threshold value at which data (e.g., data in volatile memory such as DRAM 410) may be considered hot by system 400 (e.g., determined by metadata handler 360 of FIG. 3). In some cases, hot threshold 455 may be based on a frequency at which data (e.g., of DRAM 410) is accessed, requested, in demand, and/or in transit. When a frequency at which the data (e.g., at least a portion of data of DRAM 410) is accessed satisfies the hot threshold (e.g., a predetermined or dynamically selected frequency value), then system 400 (e.g., metadata handler 360) may determine the data is hot. For example, the data may be determined to be hot when the frequency at which the data is accessed satisfies hot threshold 455 (e.g., greater than, or greater than or equal to). In some cases, the values stored in registers 415 (e.g., depicted counters, thresholds, etc.) may be based at least in part on values stored in SRAM 405 (e.g., dirty bitmap 420, hot bitmap 425, age counter 430). In some examples, the hotness of data (e.g., a file, document, etc.) is indicated by a hot bit of hot bitmap 425. In some cases, the value of the hot bit is based on a value of age counter 430 and/or a value of hot threshold.

In some examples, metadata handler 360 may maintain total dirty data counter 435 to enable eviction requester 340 to manage eviction based on total dirty data counter 435. For example, metadata handler 360 may provide data from total dirty data counter 435 to enable eviction requester 340 to enable eviction requester 340 to manage eviction based on total dirty data counter 435. In some examples, metadata handler 360 may maintain total hot data counter 440 to enable eviction requester 340 to manage eviction based on total hot data counter 440 (e.g., to enable eviction requester 340 to avoid hot data eviction that would cause relatively large NAND write amplification).

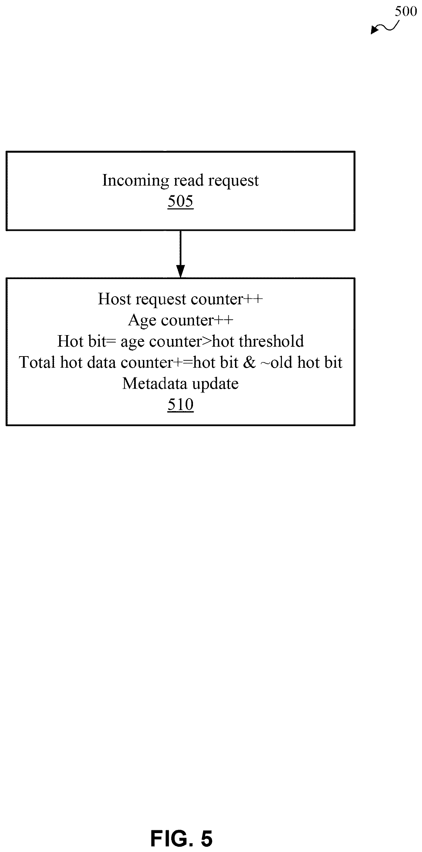

**FIG. 5** depicts a flow diagram illustrating an example method 500 associated with the disclosed systems, in accordance with example implementations described herein. Method 500 illustrates an example flow of a read request according to low latency GPF based on background eviction. In some configurations, method 500 may be implemented by PMEM controller 140 of FIG. 1, PMEM controller 230 of FIG. 2, and/or PMEM controller 325 of FIG. 3. In some examples, one or more aspects of method 700 may be performed by and/or in conjunction with one or more components of PMEM controller 325 (e.g., arbitrator 335, eviction requester 340, GPF controller 345, data controller 355, metadata handler 360, DRAM 370, persistent memory 375, etc.). In some configurations, method 500 may be implemented in conjunction with machine 105, components of machine 105, or any combination thereof. The depicted method 500 is just one implementation and one or more operations of method 500 may be rearranged, reordered, omitted, and/or otherwise modified such that other implementations are possible and contemplated.

At 505, method 500 may include receiving an incoming read request. For example, PMEM controller 325 may receive an incoming cxl.mem read request (e.g., one or more cxl.mem read requests from host 305, where the read requests are associated with data of DRAM 370).

At 510, method 500 may include performing one or more operations on metadata corresponding to data (e.g., of DRAM 370) associated with a read request (e.g., based on the incoming CXL.mem read request). For example, based on the read request, PMEM controller 325 (e.g., metadata handler 360) may increment host request counter 450 (e.g., host request counter++) and/or increment age counter 430 (e.g., age counter++). Additionally, or alternatively, based on the read request, PMEM controller 325 (e.g., metadata handler 360) may update a hot bit value (e.g., of hot bitmap 425) associated with the data tied to the read request. In some cases, PMEM controller 325 may update the hot bit value based on age counter 430 and/or hot threshold 455 (e.g. hot bit = age counter>hot threshold). For example, the hot bit may be set to binary 1 when age counter 430 exceeds hot threshold 455 (e.g., greater than, or greater than or equal to). In some cases, the hot bit may be set to binary 0 when age counter 430 is less than hot threshold 455 (e.g., less than, or less than or equal to). Additionally, or alternatively, based on the read request, PMEM controller 325 (e.g., metadata handler 360) may update total hot data counter 440 based on the hot bit (e.g., based on hot bit = age counter>hot threshold) and a previous value of the hot bit (e.g., total hot data counter+=hot bit & old hot bit). For example, with the hot bit set to binary 1 (e.g., based on age counter 430 exceeding hot threshold 455), then the total hot data counter 440 may be set to the value of hot bit (e.g., binary 1) and the value of the old hot bit. In some cases, total hot data counter 440 may be incremented by the value of the hot bit. And then based on the read request, the metadata (e.g., metadata 365) is updated accordingly (e.g., updated in SRAM 405 and/or registers 415).

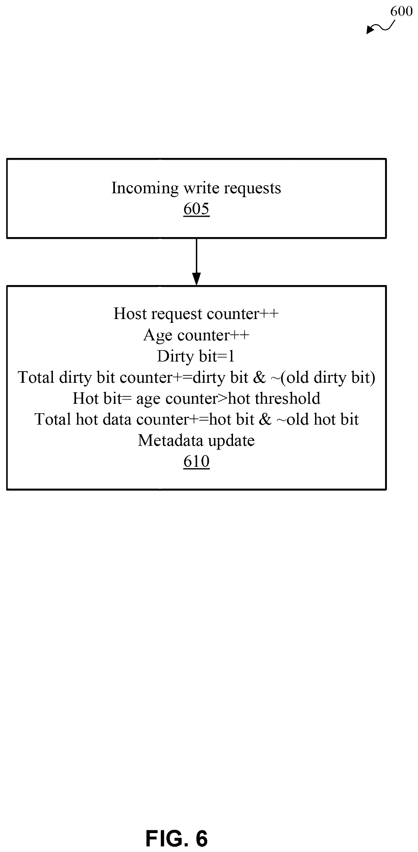

**FIG. 6** depicts a flow diagram illustrating an example method 600 associated with the disclosed systems, in accordance with example implementations described herein. Method 600 illustrates an example flow of a write request according to low latency GPF based on background eviction. In some configurations, method 600 may be implemented by PMEM controller 140 of FIG. 1, PMEM controller 230 of FIG. 2, and/or PMEM controller 325 of FIG. 3. In some examples, one or more aspects of method 600 may be performed by and/or in conjunction with one or more components of PMEM controller 325 (e.g., arbitrator 335, eviction requester 340, GPF controller 345, data controller 355, metadata handler 360, DRAM 370, persistent memory 375, etc.). In some configurations, method 600 may be implemented in conjunction with machine 105, components of machine 105, or any combination thereof. The depicted method 600 is just one implementation and one or more operations of method 600 may be rearranged, reordered, omitted, and/or otherwise modified such that other implementations are possible and contemplated.

At 605, method 600 may include receiving an incoming write request. For example, PMEM controller 325 may receive an incoming cxl.mem write request (e.g., one or more cxl.mem write requests from host 305, where the write requests are associated with data of DRAM 370).

At 610, method 600 include performing one or more operations on metadata corresponding to data (e.g., of DRAM 370) associated with a write request (e.g., based on the incoming CXL.mem write request. For example, based on the write request, PMEM controller 325 (e.g., metadata handler 360) may increment host request counter 450 (e.g., host request counter++) and/or increment age counter 430 (e.g., age counter++). Additionally, or alternatively, based on the write request, PMEM controller 325 (e.g., metadata handler 360) may update a dirty bit value of dirty bitmap 420 (e.g. dirty bit = 1 for the data associated with the write request). Additionally, or alternatively, based on the write request, PMEM controller 325 (e.g., metadata handler 360) may update total dirty data counter 435 based on the dirty bit (e.g., based on setting dirty bit = 1) and a previous value of the dirty bit (e.g., total dirty bit counter+=dirty bit & ~old dirty bit). Accordingly, based on the write request, the metadata (e.g., metadata 365) is updated.

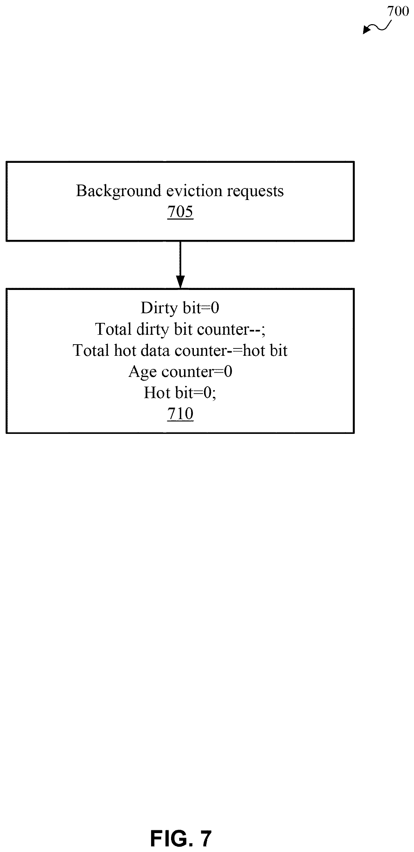

**FIG. 7** depicts a flow diagram illustrating an example method 700 associated with the disclosed systems, in accordance with example implementations described herein. Method 700 illustrates an example flow of a background eviction request according to low latency GPF based on background eviction. In some configurations, method 700 may be implemented by PMEM controller 140 of FIG. 1, PMEM controller 230 of FIG. 2, and/or PMEM controller 325 of FIG. 3. In some examples, one or more aspects of method 700 may be performed by and/or in conjunction with one or more components of PMEM controller 325 (e.g., arbitrator 335, eviction requester 340, GPF controller 345, data controller 355, metadata handler 360, DRAM 370, persistent memory 375, etc.). In some configurations, method 700 may be implemented in conjunction with machine 105, components of machine 105, or any combination thereof. The depicted method 700 is just one implementation and one or more operations of method 700 may be rearranged, reordered, omitted, and/or otherwise modified such that other implementations are possible and contemplated.

At 705, method 700 may include receiving one or more background eviction requests. For example, PMEM controller 325 may be configured to receive at least one background eviction request. In some cases, the one or more background eviction requests may be generated by eviction requester 340 (e.g., based on metadata 365 and/or a request from host 305).

At 710, method 700 may include performing one or more operations on metadata corresponding to data (e.g., of DRAM 370) associated with a background eviction request. For example, based on the background eviction request, PMEM controller 325 (e.g., metadata handler 360) may update a dirty bit (e.g., dirty bit=0 based on the data being evicted) for the data associated with the received background eviction request. Additionally, or alternatively, based on the background eviction request, PMEM controller 325 (e.g., metadata handler 360) may decrement the total dirty bit counter (e.g., total dirty bit counter-- based on the data being evicted). Additionally, or alternatively, based on the background eviction request, PMEM controller 325 (e.g., metadata handler 360) may update total hot data counter 440 (e.g., total hot data counter-=hot bit). Additionally, or alternatively, based on the background eviction request, PMEM controller 325 (e.g., metadata handler 360) may update age counter 430 (e.g., age counter=0 based on the data being evicted). Additionally, or alternatively, based on the background eviction request, PMEM controller 325 (e.g., metadata handler 360) may update a hot bit (e.g., hot bit=0 based on the data being evicted) associated with the data. Accordingly, based on the background eviction request, the metadata is updated.

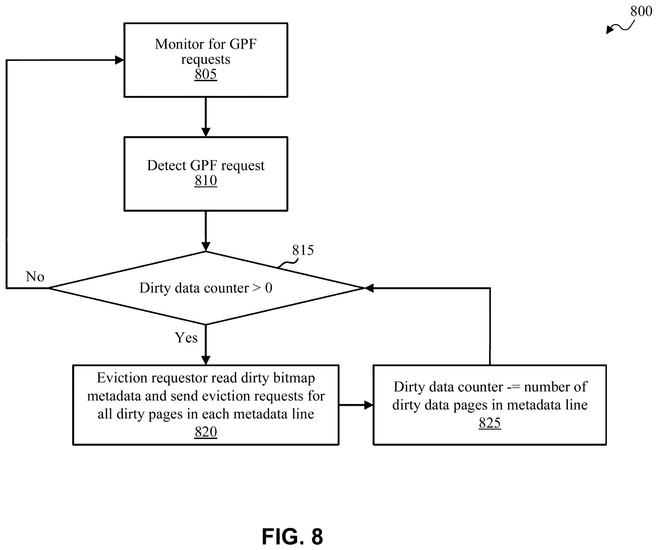

**FIG. 8** depicts a flow diagram illustrating an example method 800 associated with the disclosed systems, in accordance with example implementations described herein. Method 800 illustrates an example GPF request method based on the systems and methods described herein. In some configurations, method 800 may be implemented by PMEM controller 140 of FIG. 1, PMEM controller 230 of FIG. 2, and/or PMEM controller 325 of FIG. 3. In some examples, one or more aspects of method 800 may be performed by and/or in conjunction with one or more components of PMEM controller 325 (e.g., arbitrator 335, eviction requester 340, GPF controller 345, data controller 355, metadata handler 360, DRAM 370, persistent memory 375, etc.). In some configurations, method 800 may be implemented in conjunction with machine 105, components of machine 105, or any combination thereof. The depicted method 800 is just one implementation and one or more operations of method 800 may be rearranged, reordered, omitted, and/or otherwise modified such that other implementations are possible and contemplated.

At 805, method 800 may include monitoring for GPF requests. For example, PMEM controller 325 (e.g., in conjunction with GPF controller 345) may be configured to monitor for GPF requests.

At 810, method 800 may include detecting one or more GPF requests. For example, eviction requester 340 and/or host 305 may generate the one or more GPF requests. In some cases, GPF controller 345 may detect the one or more GPF requests based on the GPF controller monitoring for GPF requests.

At 815, method 800 may include determining whether dirty data counter (e.g., total dirty data counter 435) is greater than zero. When metadata handler 360 determines that the dirty data counter is not greater than zero (e.g., total dirty data counter 435 equals zero, meaning GPF requests are completed), then method 800 returns to 805 where GPF controller 345 returns to monitoring for GPF requests (e.g., monitoring for triggers of GPF requests). When metadata handler 360 determines that the dirty data counter is greater than zero, then method 800 proceed to 820.

At 820, method 800 may include eviction requester 340 reading the dirty bitmap metadata and sending an eviction request for a dirty page in a given metadata line or metadata row (e.g., for all dirty pages in each metadata row).

At 825, method 800 may include PMEM controller 325 (e.g., metadata handler 360) updating the dirty data counter (e.g., dirty data counter-=number of dirty data pages in metadata row).

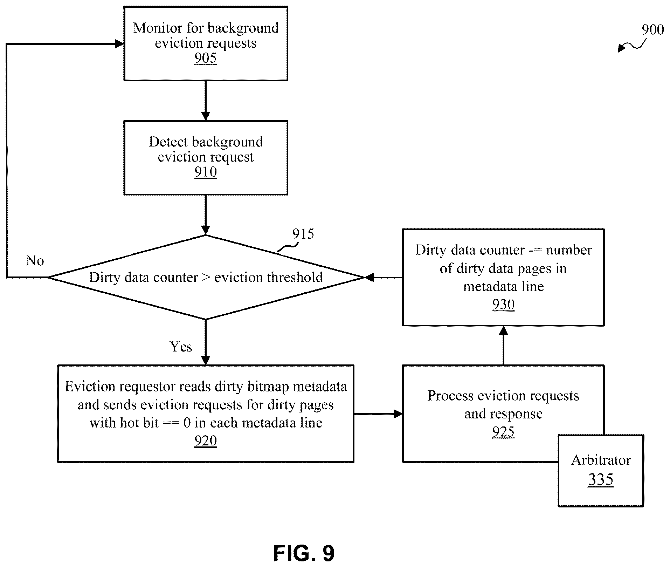

**FIG. 9** depicts a flow diagram illustrating an example method 900 associated with the disclosed systems, in accordance with example implementations described herein. Method 900 illustrates a background eviction request method based on the systems and methods described herein. In some configurations, method 900 may be implemented by PMEM controller 140 of FIG. 1, PMEM controller 230 of FIG. 2, and/or PMEM controller 325 of FIG. 3. In some examples, one or more aspects of method 800 may be performed by and/or in conjunction with one or more components of PMEM controller 325 (e.g., arbitrator 335, eviction requester 340, GPF controller 345, data controller 355, metadata handler 360, DRAM 370, persistent memory 375, etc.). In some configurations, method 900 may be implemented in conjunction with machine 105, components of machine 105, or any combination thereof. The depicted method 900 is just one implementation and one or more operations of method 900 may be rearranged, reordered, omitted, and/or otherwise modified such that other implementations are possible and contemplated.

At 905, method 900 may include monitoring for background eviction requests. For example, PMEM controller 325 (e.g., in conjunction with GPF controller 345) may be configured to monitor for background eviction requests.

At 910, method 900 may include detecting one or more background eviction requests. For example, PMEM controller 325 (e.g., GPF controller 345) may be configured to detect one or more background eviction requests based on the monitoring. In some examples, eviction requester 340 and/or host 305 may generate one or more background eviction requests. In some cases, eviction requester 340 may generate one or more background eviction requests based on input from GPF controller 345 and/or metadata handler 360.

At 915, method 900 may include determining whether the dirty data counter (e.g., total dirty data counter 435) is greater than an eviction threshold (e.g., eviction threshold 445). When PMEM controller 325 determines that the dirty data counter is not greater than the eviction threshold (e.g., total dirty data counter 435 less than or equal to eviction threshold, meaning eviction requests are completed), then method 900 return to monitoring for background eviction requests at 905 (e.g., monitoring for triggers of background eviction requests). When the method determines that the dirty data counter is greater than zero, then method 900 may proceed to 920.

At 920, method 900 may include eviction requester 340 reading dirty bitmap metadata (e.g., reading an entry of dirty bitmap 420 for the data associated with the background eviction request). In some cases, eviction requester 340 may generate an eviction request for a dirty page (e.g., each dirty page) with hot bit==0 (e.g., for each metadata row).

At 925, method 900 may include processing the eviction requests and response. For example, arbitrator 335 may be configured to processing an eviction request and the response to each eviction request (e.g., denying a request or granting a request). When arbitrator 335 grants a request, arbitrator 335 may allow the request to proceed to data controller 355 where the request is executed.

At 930, method 900 may include performing one or more operations based on the processing of eviction requests at 925. For example, PMEM controller 325 (e.g., metadata handler 360) may be configured to update the dirty data counter (e.g., dirty data counter-=number of dirty data pages in metadata row) based on the processing of background eviction requests.

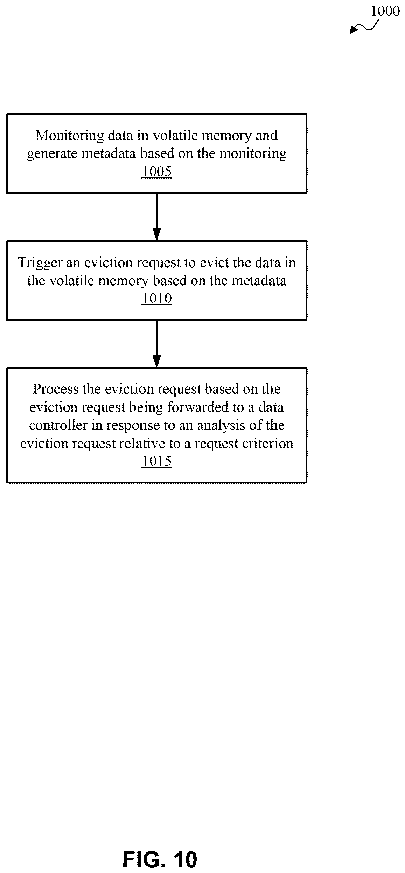

**FIG. 10** depicts a flow diagram illustrating an example method 1000 associated with the disclosed systems, in accordance with example implementations described herein. In some configurations, method 1000 may be implemented by PMEM controller 140 of FIG. 1, PMEM controller 230 of FIG. 2, and/or PMEM controller 325 of FIG. 3. In some configurations, method 1000 may be implemented in conjunction with machine 105, components of machine 105, or any combination thereof. The depicted method 1000 is just one implementation and one or more operations of method 1000 may be rearranged, reordered, omitted, and/or otherwise modified such that other implementations are possible and contemplated.

At 1005, method 1000 may include generating metadata based on monitoring data in volatile memory. For example, PMEM controller 325 may generate metadata based on PMEM controller 325 monitoring data in volatile memory.

At 1010, method 1000 may include triggering an eviction request to evict the data in the volatile memory based on the metadata. For example, PMEM controller 325 may trigger an eviction request to evict the data in the volatile memory based on PMEM controller 325 analyzing the metadata.

At 1015, method 1000 may include processing the eviction request based on the eviction request being forwarded to a data controller in response to an analysis of the eviction request based on a request criterion. For example, PMEM controller 325 may process the eviction request based on PMEM controller 325 analyzing the eviction request relative to a request criterion and providing the eviction request to a data controller based on the analysis.

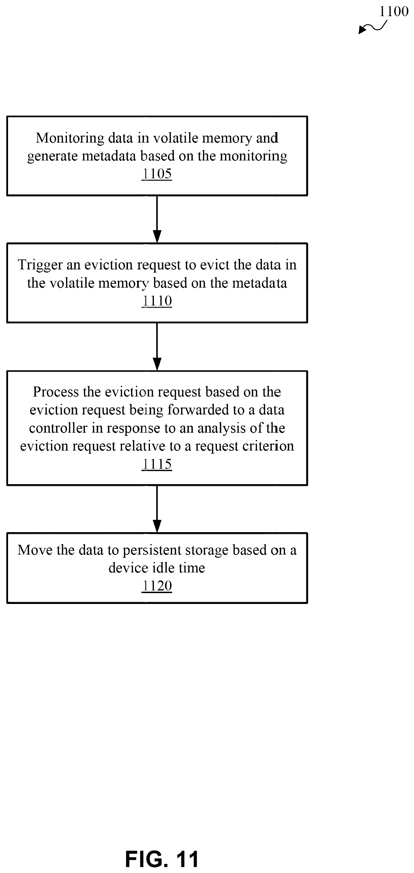

**FIG. 11** depicts a flow diagram illustrating an example method 1100 associated with the disclosed systems, in accordance with example implementations described herein. In some configurations, method 1100 may be implemented by PMEM controller 140 of FIG. 1, PMEM controller 230 of FIG. 2, and/or PMEM controller 325 of FIG. 3. In some configurations, method 1100 may be implemented in conjunction with machine 105, components of machine 105, or any combination thereof. The depicted method 1100 is just one implementation and one or more operations of method 1100 may be rearranged, reordered, such that other implementations are possible and contemplated.

At 1105, method 1100 may include generating metadata based on monitoring data in volatile memory. For example, PMEM controller 325 may generate metadata based on PMEM controller 325 monitoring data in volatile memory.

At 1110, method 1100 may include triggering an eviction request to evict the data in the volatile memory based on the metadata. For example, PMEM controller 325 may trigger an eviction request to evict the data in the volatile memory based on PMEM controller 325 analyzing the metadata.

At 1115, method 1100 may include processing the eviction request based on the eviction request being forwarded to a data controller in response to an analysis of the eviction request relative to a request criterion. For example, PMEM controller 325 may process the eviction request based on PMEM controller 325 analyzing the eviction request relative to a request criterion and providing the eviction request to a data controller based on the analysis.

At 1120, method 1100 may include moving the data to persistent storage based on a device idle time. For example, processing the eviction request may include PMEM controller 325 moving the data to persistent storage based on a device idle time.

In the examples described herein, the configurations and operations are example configurations and operations, and may involve various additional configurations and operations not explicitly illustrated. In some examples, one or more aspects of the illustrated configurations and/or operations may be omitted. In some embodiments, one or more of the operations may be performed by components other than those illustrated herein. Additionally, or alternatively, the sequential and/or temporal order of the operations may be varied.

Certain embodiments may be implemented in one or a combination of hardware, firmware, and software. Other embodiments may be implemented as instructions stored on a computer-readable storage device, which may be read and executed by at least one processor to perform the operations described herein. A computer-readable storage device may include any non-transitory memory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media.

The word "exemplary" is used herein to mean "serving as an example, instance, or illustration." Any embodiment described herein as "exemplary" is not necessarily to be construed as preferred or advantageous over other embodiments. The terms "computing device," "user device," "communication station," "station," "handheld device," "mobile device," "wireless device" and "user equipment" (UE) as used herein refers to a wireless communication device such as a cellular telephone, smartphone, tablet, netbook, wireless terminal, laptop computer, a femtocell, High Data Rate (HDR) subscriber station, access point, printer, point of sale device, access terminal, or other personal communication system (PCS) device. The device may be either mobile or stationary.

As used within this document, the term "communicate" is intended to include transmitting, or receiving, or both transmitting and receiving. This may be particularly useful in claims when describing the organization of data that is being transmitted by one device and received by another, but only the functionality of one of those devices is required to infringe the claim. Similarly, the bidirectional exchange of data between two devices (both devices transmit and receive during the exchange) may be described as 'communicating', when only the functionality of one of those devices is being claimed. The term "communicating" as used herein with respect to a wireless communication signal includes transmitting the wireless communication signal and/or receiving the wireless communication signal. For example, a wireless communication unit, which is capable of communicating a wireless communication signal, may include a wireless transmitter to transmit the wireless communication signal to at least one other wireless communication unit, and/or a wireless communication receiver to receive the wireless communication signal from at least one other wireless communication unit.

Some embodiments may be used in conjunction with various devices and systems, for example, a Personal Computer (PC), a desktop computer, a mobile computer, a laptop computer, a notebook computer, a tablet computer, a server computer, a handheld computer, a handheld device, a Personal Digital Assistant (PDA) device, a handheld PDA device, an on-board device, an off-board device, a hybrid device, a vehicular device, a non-vehicular device, a mobile or portable device, a consumer device, a non-mobile or non-portable device, a wireless communication station, a wireless communication device, a wireless Access Point (AP), a wired or wireless router, a wired or wireless modem, a video device, an audio device, an audio-video (A/V) device, a wired or wireless network, a wireless area network, a Wireless Video Area Network (WVAN), a Local Area Network (LAN), a Wireless LAN (WLAN), a Personal Area Network (PAN), a Wireless PAN (WPAN), and the like.

Some embodiments may be used in conjunction with one way and/or two-way radio communication systems, cellular radio-telephone communication systems, a mobile phone, a cellular telephone, a wireless telephone, a Personal Communication Systems (PCS) device, a PDA device which incorporates a wireless communication device, a mobile or portable Global Positioning System (GPS) device, a device which incorporates a GPS receiver or transceiver or chip, a device which incorporates an RFID element or chip, a Multiple Input Multiple Output (MIMO) transceiver or device, a Single Input Multiple Output (SIMO) transceiver or device, a Multiple Input Single Output (MISO) transceiver or device, a device having one or more internal antennas and/or external antennas, Digital Video Broadcast (DVB) devices or systems, multi-standard radio devices or systems, a wired or wireless handheld device, e.g., a Smartphone, a Wireless Application Protocol (WAP) device, or the like.

Some embodiments may be used in conjunction with one or more types of wireless communication signals and/or systems following one or more wireless communication protocols, for example, Radio Frequency (RF), Infrared (IR), Frequency-Division Multiplexing (FDM), Orthogonal FDM (OFDM), Time-Division Multiplexing (TDM), Time-Division Multiple Access (TDMA), Extended TDMA (E-TDMA), General Packet Radio Service (GPRS), extended GPRS, Code-Division Multiple Access (CDMA), Wideband CDMA (WCDMA), CDMA 2000, single-carrier CDMA, multi-carrier CDMA, Multi-Carrier Modulation (MDM), Discrete Multi-Tone (DMT), Bluetooth^{™} Global Positioning System (GPS), Wi-Fi, Wi-Max, ZigBee^{™}, Ultra-Wideband (UWB), Global System for Mobile communication (GSM), 2G, 2.5G, 3G, 3.5G, 4G, Fifth Generation (5G) mobile networks, 3GPP, Long Term Evolution (LTE), LTE advanced, Enhanced Data rates for GSM Evolution (EDGE), or the like. Other embodiments may be used in various other devices, systems, and/or networks.

Although an example processing system has been described above, embodiments of the subject matter and the functional operations described herein can be implemented in other types of digital electronic circuitry, or in computer software, firmware, or hardware, including the structures disclosed in this specification and their structural equivalents, or in combinations of one or more of them.

Embodiments of the subject matter and the operations described herein can be implemented in digital electronic circuitry, or in computer software, firmware, or hardware, including the structures disclosed in this specification and their structural equivalents, or in combinations of one or more of them. Embodiments of the subject matter described herein can be implemented as one or more computer programs, i.e., one or more components of computer program instructions, encoded on computer storage medium for execution by, or to control the operation of, information/data processing apparatus. Alternatively, or in addition, the program instructions can be encoded on an artificially-generated propagated signal, for example a machine-generated electrical, optical, or electromagnetic signal, which is generated to encode information/data for transmission to suitable receiver apparatus for execution by an information/data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (for example multiple CDs, disks, or other storage devices).

The operations described herein can be implemented as operations performed by an information/data processing apparatus on information/data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, for example an FPGA (field programmable gate array) or an ASIC (application-specific integrated circuit). The apparatus can also include, in addition to hardware, code that creates an execution environment for the computer program in question, for example code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a component, component, subroutine, object, or other unit suitable for use in a computing environment. A computer program may, but need not, correspond to a file in a file system. A program can be stored in a portion of a file that holds other programs or information/data (for example one or more scripts stored in a markup language document), in a single file dedicated to the program in question, or in multiple coordinated files (for example files that store one or more components, sub-programs, or portions of code). A computer program can be deployed to be executed on one computer or on multiple computers that are located at one site or distributed across multiple sites and interconnected by a communication network.

The processes and logic flows described herein can be performed by one or more programmable processors executing one or more computer programs to perform actions by operating on input information/data and generating output. Processors suitable for the execution of a computer program include, by way of example, both general and special purpose microprocessors, and any one or more processors of any kind of digital computer. Generally, a processor will receive instructions and information/data from a read-only memory or a random-access memory or both. The essential elements of a computer are a processor for performing actions in accordance with instructions and one or more memory devices for storing instructions and data. Generally, a computer will also include, or be operatively coupled to receive information/data from or transfer information/data to, or both, one or more mass storage devices for storing data, for example magnetic, magneto-optical disks, or optical disks. However, a computer need not have such devices. Devices suitable for storing computer program instructions and information/data include all forms of non-volatile memory, media and memory devices, including by way of example semiconductor memory devices, for example EPROM, EEPROM, and flash memory devices; magnetic disks, for example internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described herein can be implemented on a computer having a display device, for example a CRT (cathode ray tube) or LCD (liquid crystal display) monitor, for displaying information/data to the user and a keyboard and a pointing device, for example a mouse or a trackball, by which the user can provide input to the computer. Other kinds of devices can be used to provide for interaction with a user as well; for example, feedback provided to the user can be any form of sensory feedback, for example visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described herein can be implemented in a computing system that includes a back-end component, for example as an information/data server, or that includes a middleware component, for example an application server, or that includes a front-end component, for example a client computer having a graphical user interface or a web browser through which a user can interact with an embodiment of the subject matter described herein, or any combination of one or more such back-end, middleware, or front-end components. The components of the system can be interconnected by any form or medium of digital information/data communication, for example a communication network. Examples of communication networks include a local area network ("LAN") and a wide area network ("WAN"), an inter-network (for example the Internet), and peer-to-peer networks (for example ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits information/data (for example an HTML page) to a client device (for example for purposes of displaying information/data to and receiving user input from a user interacting with the client device). Information/data generated at the client device (for example a result of the user interaction) can be received from the client device at the server.

While this specification contains many specific embodiment details, these should not be construed as limitations on the scope of any embodiment or of what may be claimed, but rather as descriptions of features specific to particular embodiments. Certain features that are described herein in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain embodiments, multitasking and parallel processing may be advantageous.

## Claims

1. A persistent memory controller (325) for memory management, the persistent memory controller (325) comprising:
a metadata controller (360) configured to generate metadata (365) based on the metadata controller monitoring data in volatile memory (370);
a memory manager (340) configured to generate a request to remove the data in the volatile memory (370) based on the metadata (365); and
a data controller (355) configured to process the request based on an arbitrator (335) granting the request based on a request criterion and the arbitrator (335) allowing the request to proceed to the data controller (355),
**characterized in that**
the request criterion is based on a weighted round robin selection process to determine which request to process next.

2. The persistent memory controller (325) of claim 1, wherein the data controller (355) processing the request includes the data controller (355) removing the data based on device idle time.

3. The persistent memory controller (325) of claim 1 or 2, wherein the request criterion is based on a priority of the request and a priority of a host request.

4. The persistent memory controller (325) of any one of claims 1 to 3, wherein the request criterion is based on a pattern of the data in the volatile memory (370) including an incoming data pattern, a data age and/or data hotness associated with data in the volatile memory (370).

5. The persistent memory controller (325) of any one of claims 1 to 4, wherein the request criterion is based on at least one of:
an age of the data in the volatile memory (370), or
a hotness of the data in the volatile memory (370).

6. The persistent memory controller (325) of any one of claims 1 to 5, wherein the request criterion is based on a number of requests at the memory manager (340) and a number of requests at a host (305).

7. The persistent memory controller (325) of claim 6, wherein the request criterion is based on a frequency of requests at the memory manager (340) and a frequency of requests at the host (305).

8. The persistent memory controller (325) of claim 6 or 7, wherein the request criterion is based on the memory manager (340) determining a status of the host (305).

9. The persistent memory controller (325) of any one of claims 1 to 8, wherein the metadata (365) includes at least one of:
a dirty status of the data in the volatile memory (370),
an age of the data in the volatile memory (370), or
register metadata (365) that includes at least one of a dirty data count (435), a hot data count (440), a host request count (450), an eviction threshold (445), or a data hotness threshold (455).

10. The persistent memory controller (325) of any one of claims 1 to 9, wherein the metadata (365) indicates information regarding the data in the volatile memory (370).

11. A method (500-1100) in a persistent memory controller for memory management via at least one processor (110) of one or more processors, the method comprising:
generating (1005; 1105) metadata (365) based on monitoring data in volatile memory (370);
generating (1010; 1110) a request to remove the data in the volatile memory (370) based on the metadata (365); and
processing (1015; 1115) the request based on the request being allowed to proceed a data controller (355) in response to a granting of the request based on a request criterion,
**characterized in that**
the request criterion is based on a weighted round robin selection process to determine which request to process next.

12. The method (500-1100) of claim 11, wherein processing the request includes removing the data based on device idle time.

13. The method (500-1100) of claim 11 or 12, wherein the request criterion is based on at least one of:
a priority of the request and a priority of a host request,
a pattern of the data in the volatile memory,
an age of the data in the volatile memory (370),
a hotness of the data in the volatile memory,
a number of requests at a memory manager (340) and a number of requests at a host,
a frequency of requests at the memory manager (340) and a frequency of requests at the host (305), and
determining the host (305) is in an idle state.

14. The method (500-1100) of any one of claims 11 to 13, wherein the metadata (365) includes at least one of:
a dirty status of the data in the volatile memory (370),
an age of the data in the volatile memory (370), or
register metadata (365) that includes at least one of a dirty data count (435), a hot data count (440), a host request count (450), an eviction threshold (445), or a data hotness threshold (455).

15. A non-transitory computer-readable medium storing code, the code comprising instructions executable by at least one processor of a device to perform the method (500-1100) of any one of claims 11 to 14.

## Patentansprüche

1. Persistenter Speicher-Controller (325) für eine Speicherverwaltung, wobei der persistente Speicher-Controller (325) aufweist:
einen Metadaten-Controller (360), der so konfiguriert ist, dass er Metadaten (365) basierend auf den Metadaten-Controller-Überwachungsdaten in dem flüchtigen Speicher (370) generiert;
einen Speichermanager (340), der so konfiguriert ist, dass er basierend auf den Metadaten (365) eine Anforderung zum Entfernen der Daten in dem flüchtigen Speicher (370) generiert; und
einen Datencontroller (355), der so konfiguriert ist, dass er die Anforderung basierend auf einem Arbiter (335) verarbeitet, welcher die Anforderung basierend auf einem Anforderungskriterium gewährt, und wobei der Arbiter (335) zulässt, dass die Anforderung an den Datencontroller (355) weitergeleitet wird,
**dadurch gekennzeichnet, dass**
das Anforderungskriterium auf einem gewichteten Round-Robin-Auswahlverfahren basiert, um zu bestimmen, welche Anforderung als nächste verarbeitet werden soll.

2. Persistenter Speichercontroller (325) nach Anspruch 1, wobei der Datencontroller (355), der die Anforderung verarbeitet, den Datencontroller (355) umfasst, der die Daten basierend auf der Geräteleerlaufzeit entfernt.

3. Persistenter Speichercontroller (325) nach Anspruch 1 oder 2, wobei das Anforderungskriterium auf einer Priorität der Anforderung und einer Priorität einer Hostanforderung basiert.

4. Persistenter Speichercontroller (325) nach einem der Ansprüche 1 bis 3, wobei das Anforderungskriterium auf einem Muster der Daten in dem flüchtigen Speicher (370) basiert, welches ein eingehendes Datenmuster, ein Datenalter und/oder eine Datenaktualität beinhaltet, die den Daten in dem flüchtigen Speicher (370) zugeordnet sind.

5. Persistenter Speichercontroller (325) nach einem der Ansprüche 1 bis 4, wobei das Anforderungskriterium auf mindestens einem der folgenden Kriterien basiert:
einem Alter der Daten in dem flüchtigen Speicher (370) oder
einer Aktualität der Daten in dem flüchtigen Speicher (370).

6. Persistenter Speicher-Controller (325) nach einem der Ansprüche 1 bis 5, wobei das Anforderungskriterium auf einer Anzahl von Anforderungen an den Speichermanager (340) und einer Anzahl von Anforderungen an einen Host (305) basiert.

7. Persistenter Speichercontroller (325) nach Anspruch 6, wobei das Anforderungskriterium auf einer Häufigkeit von Anforderungen an den Speichermanager (340) und einer Häufigkeit von Anforderungen an den Host (305) basiert.

8. Persistenter Speichercontroller (325) nach Anspruch 6 oder 7, wobei das Anforderungskriterium darauf basiert, dass der Speichermanager (340) einen Status des Hosts (305) bestimmt.

9. Persistenter Speichercontroller (325) nach einem der Ansprüche 1 bis 8, wobei die Metadaten (365) mindestens eines der folgenden Elemente umfassen:
einen Dirty-Status der Daten in dem flüchtigen Speicher (370),
ein Alter der Daten in dem flüchtigen Speicher (370) oder
Register-Metadaten (365), die eine Anzahl (435) schmutziger Daten, eine Anzahl (440) heißer Daten, eine Anzahl (450) von Host-Anforderungen, einen Datenräumungs-Schwellenwert (445) und/oder einen Daten-Aktualitäts-Schwellenwert (455) beinhalten.

10. Persistenter Speichercontroller (325) nach einem der Ansprüche 1 bis 9, wobei die Metadaten (365) Informationen über die Daten in dem flüchtigen Speicher (370) angeben.

11. Verfahren (500-1100) in einem persistenten Speichercontroller zur Speicherverwaltung über mindestens einen Prozessor (110) von einem oder mehreren Prozessoren, wobei das Verfahren folgende Schritte beinhaltet:
Erzeugen (1005; 1105) von Metadaten (365) basierend auf Überwachungsdaten in dem flüchtigen Speicher (370);
Erzeugen (1010; 1110) einer Anforderung zum Entfernen der Daten in dem flüchtigen Speicher (370) basierend auf den Metadaten (365); und
Verarbeiten (1015; 1115) der Anforderung basierend darauf, dass die Anforderung an einen Datencontroller (355) weitergeleitet werden darf als Reaktion auf eine Gewährung der Anforderung basierend auf einem Anforderungskriterium,
**dadurch gekennzeichnet, dass**
das Anforderungskriterium auf einem gewichteten Round-Robin-Auswahlverfahren basiert, um zu bestimmen, welche Anforderung als nächste verarbeitet werden soll.

12. Verfahren (500-1100) nach Anspruch 11, wobei die Verarbeitung der Anforderung ein Entfernen der Daten basierend auf einer Geräteleerlaufzeit umfasst.

13. Verfahren (500-1100) nach Anspruch 11 oder 12, wobei das Anforderungskriterium auf mindestens einem der folgenden Kriterien basiert:
einer Priorität der Anforderung und einer Priorität einer Host-Anforderung,
einem Muster der Daten in dem flüchtigen Speicher,
einem Alter der Daten in dem flüchtigen Speicher (370),
einer Aktualität der Daten in dem flüchtigen Speicher,
einer Anzahl von Anfragen an einen Speichermanager (340) und einer Anzahl von Anfragen an einen Host,
einer Häufigkeit von Anfragen an den Speichermanager (340) und einer Häufigkeit von Anfragen an den Host (305) und
einer Feststellung, dass sich der Host (305) in einem Leerlaufzustand befindet.

14. Verfahren (500-1100) nach einem der Ansprüche 11 bis 13, wobei die Metadaten (365) mindestens eines der folgenden Elemente umfassen:
einen Dirty-Status der Daten in dem flüchtigen Speicher (370),
ein Alter der Daten in dem flüchtigen Speicher (370) oder
Register-Metadaten (365), die mindestens eine Anzahl (435) schmutziger Daten, eine Anzahl (440) heißer Daten, eine Anzahl (450) von Host-Anfragen, einen Datenräumungs-Schwellenwert (445) und/oder einen Daten-Aktualitäts-Schwellenwert (455) beinhalten.

15. Nicht-transitorisches, computerlesbares Medium, das einen Code speichert, wobei der Code Anweisungen umfasst, die von mindestens einem Prozessor von einem Gerät ausgeführt werden können, um das Verfahren (500-1100) aus einem der Ansprüche 11 bis 14 durchzuführen.

## Revendications

1. Contrôleur de mémoire persistante (325) pour la gestion de la mémoire, le contrôleur de mémoire persistante (325) comprenant :
un contrôleur de métadonnées (360) configuré pour générer des métadonnées (365) sur la base de la surveillance, par le contrôleur de métadonnées, de données dans une mémoire volatile (370) ;
un gestionnaire de mémoire (340) configuré pour générer une requête d'éviction des données présentes dans la mémoire volatile (370) sur la base des métadonnées (365) ; et
un contrôleur de données (355) configuré pour traiter la requête sur la base du fait qu'un arbitre (335) accorde la requête en fonction d'un critère de requête et autorise la requête à être transmise au contrôleur de données (355),
**caractérisé en ce que** le critère de requête est fondé sur un processus de sélection pondérée de type « round robin » pour déterminer quelle requête doit être traitée ensuite.

2. Contrôleur de mémoire persistante (325) selon la revendication 1, dans lequel le traitement de la requête par le contrôleur de données (355) comprend que le contrôleur de données (355) procède à l'éviction des données en fonction d'un temps d'inactivité du dispositif.

3. Contrôleur de mémoire persistante (325) selon la revendication 1 ou 2, dans lequel le critère de requête est fondé sur une priorité de la requête et une priorité d'une requête de l'hôte.

4. Contrôleur de mémoire persistante (325) selon l'une quelconque des revendications 1 à 3, dans lequel le critère de requête est fondé sur un profil des données dans la mémoire volatile (370), comprenant un profil de données entrantes, un âge des données et/ou fréquence d'accès des données associé aux données dans la mémoire volatile (370).

5. Contrôleur de mémoire persistante (325) selon l'une quelconque des revendications 1 à 4, dans lequel le critère de requête est fondé sur au moins l'un des éléments suivants :
un âge des données dans la mémoire volatile (370) ; ou
une fréquence d'accès des données des données dans la mémoire volatile (370).

6. Contrôleur de mémoire persistante (325) selon l'une quelconque des revendications 1 à 5, dans lequel le critère de requête est fondé sur un nombre de requêtes au niveau du gestionnaire de mémoire (340) et un nombre de requêtes au niveau d'un hôte (305).

7. Contrôleur de mémoire persistante (325) selon la revendication 6, dans lequel le critère de requête est fondé sur une fréquence de requêtes au niveau du gestionnaire de mémoire (340) et une fréquence de requêtes au niveau de l'hôte (305).

8. Contrôleur de mémoire persistante (325) selon la revendication 6 ou 7, dans lequel le critère de requête est fondé sur la détermination, par le gestionnaire de mémoire (340), d'un état de l'hôte (305).

9. Contrôleur de mémoire persistante (325) selon l'une quelconque des revendications 1 à 8, dans lequel les métadonnées (365) comprennent au moins l'un des éléments suivants :
un état sale des données dans la mémoire volatile (370) ;
un âge des données dans la mémoire volatile (370) ; ou
des métadonnées de registre (365) comprenant au moins l'un des éléments suivants : un compteur de données sales (435), un compteur fondé sur la fréquence d'accès des données (440), un compteur de requêtes de l'hôte (450), un seuil d'éviction (445) ou un seuil de fréquence d'accès (455).

10. Contrôleur de mémoire persistante (325) selon l'une quelconque des revendications 1 à 9, dans lequel les métadonnées (365) indiquent des informations concernant les données dans la mémoire volatile (370).

11. Procédé (500-1100) mis en œuvre dans un contrôleur de mémoire persistante pour la gestion de la mémoire au moyen d'au moins un processeur (110) parmi un ou plusieurs processeurs, le procédé comprenant :
générer (1005 ; 1105) des métadonnées (365) sur la base de la surveillance de données dans une mémoire volatile (370) ;
générer (1010 ; 1110) une requête d'éviction des données présentes dans la mémoire volatile (370) sur la base des métadonnées (365) ; et
traiter (1015 ; 1115) la requête sur la base du fait que la requête est autorisée à être transmise à un contrôleur de données (355) en réponse à l'autorisation de la requête en fonction d'un critère de requête,
**caractérisé en ce que** le critère de requête est fondé sur un processus de sélection pondérée de type « round robin » pour déterminer quelle requête doit être traitée ensuite.

12. Procédé (500-1100) selon la revendication 11, dans lequel le traitement de la requête comprend l'éviction des données en fonction d'un temps d'inactivité du dispositif.

13. Procédé (500-1100) selon la revendication 11 ou 12, dans lequel le critère de requête est fondé sur au moins l'un des éléments suivants :
une priorité de la requête et une priorité d'une requête de l'hôte ;
un profil des données dans la mémoire volatile ;
un âge des données dans la mémoire volatile (370) ;
une fréquence d'accès des données dans la mémoire volatile ;
un nombre de requêtes au niveau d'un gestionnaire de mémoire (340) et un nombre de requêtes au niveau d'un hôte ;
une fréquence de requêtes au niveau du gestionnaire de mémoire (340) et une fréquence de requêtes au niveau de l'hôte (305) ; et
la détermination du fait que l'hôte (305) se trouve dans un état d'inactivité.

14. Procédé (500-1100) selon l'une quelconque des revendications 11 à 13, dans lequel les métadonnées (365) comprennent au moins l'un des éléments suivants :
un état sale des données dans la mémoire volatile (370) ;
un âge des données dans la mémoire volatile (370) ; ou
des métadonnées de registre (365) comprenant au moins l'un des éléments suivants : un compteur de données sales (435), un compteur fondé sur la fréquence d'accès des données (440), un compteur de requêtes de l'hôte (450), un seuil d'éviction (445) ou un seuil de fréquence d'accès (455).

15. Support lisible par ordinateur non transitoire stockant un code, le code comprenant des instructions exécutables par au moins un processeur d'un dispositif pour mettre en œuvre le procédé (500-1100) selon l'une quelconque des revendications 11 à 14.
